# EUROPÄISCHE PATENTSCHRIFT

(11) **EP 3 254 920 B1**
(45) Veröffentlichungstag und Bekanntmachung des Hinweises auf die Patenterteilung: **04.09.2019**
(21) Anmeldenummer: 16001322.3
(22) Anmeldetag: 11.06.2016
(51) Int. Cl.: B61B 12/02

(54) **SEILROLLEN-EINLAGERING BZW. SEILROLLE FÜR EINE SEILBAHN**
ROPE PULLEY INSERT RING OR ROPE PULLEY FOR A ROPEWAY
BAGUE INTEGREE DE POULIE A CABLE OU POULIE A CABLE POUR TELEPHERIQUE

(43) Veröffentlichungstag der Anmeldung: 13.12.2017
(73) Patentinhaber: Laister, Roland, 9450 Lüchingen (CH); Tagmann, Stefan, 9443 Widnau (CH)
(72) Erfinder: Laister, Roland, 9450 Lüchingen (CH); Tagmann, Stefan, 9443 Widnau (CH)
(74) Vertreter: Reb, Carina

(56) Entgegenhaltungen:
- WO-A1-2013/122983
- CH-A- 495 911
- US-A- 1 944 426

## Beschreibung

Die vorliegende Erfindung betrifft eine Seilrolle bzw. einen Seilrollen-Einlagering, manchmal auch Futter genannt, für eine Seilrolle oder auch für eine Umlenkscheibe einer Seilbahn, sei es einer Luft- oder einer Schienenseilbahn oder eines Schleppliftes. Erfindungsgemäße Seilrollen-Einlageringe können allerdings auch bei Seilrollen für Lifte, Aufzüge, Kräne usw. Anwendung finden, im Grunde genommen überall dort, wo ein Drahtseil oder Seil geführt entlangläuft oder umgelenkt wird. Die Erfindung betrifft gleichermaßen sogenannte Verschleißbänder, die anstatt einstückiger, geschlossener Seilrollen-Einlageringe verschließbare Bänder vorsehen.

Solche Seilrollen-Einlageringe, Futter oder Ausfütterungen der Seilrollen schonen einerseits das Seil, aber auch die Seilrolle selbst oder vielmehr die sie zusammensetzenden, meist metallischen Seilrollen-Scheiben. Des Weiteren wird auch die Lagerung der Seilrolle und das Tragwerk geschont. Andererseits dienen die Seilrollen-Einlageringe dem Komfort beim Seilbahnbetrieb, indem sie für einen mechanisch und akustisch ruhigen Lauf sorgen. Demzufolge sind die Seilrollen-Einlageringe in der Regel als einteilige Ringe meistens aus einem Elastomer oder gemeinhin Gummi gefertigt, mit oder ohne flexiblen Textilgewebe- oder flexiblen Drahtgeflecht-Einlagen. Für extrem hohe Belastungen werden die Seilrollen-Einlageringe aus speziellem Kunststoff gefertigt, der auf Basis von Polyurethan sein und zu der Kategorie der Thermo- oder Duroplaste gehören kann.

Nachteilig ist bei den bekannten Seilrollen-Einlageringen, dass sie im Grunde immer einen Kompromiss darstellen, zwischen Komfort, Schall-, Schlag- und Vibrationsdämpfung sowie Rollwerks- und Tragwerksschonung einerseits, und Reibungsverlusten und möglichst geringem Verschleiß andererseits. Wenn die erstere Aufgabe des Komforts gut erfüllt wird, so geht es mit hohem Verschleiß der Seilrollen bzw. der Seilrollen-Einlageringe einher und damit mit hohen Betriebskosten für das laufende Warten und Auswechseln der Seilrollen-Einlageringe bzw. der Seilrollen oder der sogenannten Rollenbatterien oder -kassetten. Dieses Warten und Auswechseln der Seilrollen-Einlageringe ist generell bei dem Betrieb einer Seilbahn einer der höchsten Betriebsposten, wenn nicht gar der höchste, weil die Seilbahn beim Auswechseln außer Betrieb sein muss, damit zeit- und arbeitskraftintensiv die einzelnen Seilrollen Vor Ort oben an den Stützmasten geöffnet und neue Seilrollen-Einlageringe eingesetzt werden. Und falls die gesamte Rollenbatterie oder -kassette mit einem Helikopter ausgewechselt wird, ist es ebenfalls kostenintensiv.

Für den störungsfreien Betrieb einer Seilbahn sind die Seilrollen und ihre Seilrollen-Einlageringe hingegen elementar. Sie zeichnen sich durch viele Merkmale aus und müssen unterschiedlichen und hohen Anforderungen gerecht werden.

Den Seilrollen und ihren Seilrollen-Einlageringen kommt beispielsweise hinsichtlich der Sicherheit eine wichtige Rolle zu, weil sie mittels axial überstehender Rollenborde sowie mittels einer an der Außendurchmesser-Fläche bzw. Mantelfläche der Seilrollen-Einlageringe mittig angeordneten Führungsnut, auch Laufrille oder Seilrillentiefe genannt, Entgleisungen des Seiles verhindern. Dieses gilt gleichermaßen für alle Seilarten, sei es Förderseil, Trag-, Zug-, Gegen-, Daten- oder Blitzschutz-Seil, bei Luftseilbahnen, also Pendel-, Gondel-, Kombi-, Materialseil- oder Sesselbahnen oder -liften, sowie bei Schienenseilbahnen, also Standseil- oder Kabelbahnen. Seilrollen mit Seilrollen-Einlageringen kommen des Weiteren bei Ski- bzw. Schleppliften vor, aber auch bei Anlagen, die nicht den Seilbahngesetzen unterliegen, wie etwa Aufzügen, Wasserskiliften, Seilwegen, Seilwinden, Seilzügen, Hänge- oder Schwebebahnen oder aber auch Vergnügungsbahnen bzw. Fahrgeschäften.

Neben der Führung des Drahtseiles oder Seiles kommt den Seilrollen-Einlageringen noch die Funktion zu, dass die Elastomer-, Gummi- oder Kunststoffmischung der Seilrollen-Einlageringe elastisch weich und absorbierend sein soll, gleichzeitig aber soll der Seilrollen-Einlagering möglichst fix auf dem Rollenkörper sitzen und nicht walken oder gar wandern bzw. rotieren. Sobald nämlich der Seilrollen-Einlagering eine Walkarbeit auszuführen beginnt, leidet nicht nur die Dämpfung, sondern die Reibungsverluste erhöhen sich stark. Deshalb werden die Seilrollen-Einlageringe unter einer sehr hohen Vorspannung auf die Rollenkörper aufgezogen, aber dieses ist keine optimale Lösung, weil sich dadurch die Materialeigenschaften des Seilrollen-Einlageringes insgesamt verändern.

In diesem Zusammenhang sind Maßnahmen bekannt, nur die Innendurchmesser-Fläche bzw. den sogenannten Ringfuß des Seilrollen-Einlageringes zu verstärken, beispielsweise mit Gewebeeinlagen (DE 1 036 299 B), oder mit einer aufvulkanisierten Armierung aus Stahlcord (CH 615 393 A5) oder aber auch, im Material des Seilrollen-Einlageringes Hohlräume, Aussparungen, Kanäle und geschäumte Bereiche vorzusehen (EP 2 159 124 A1).

Weiterhin können die Seilrollen-Einlageringe, obwohl aus Gummi oder Kunststoff hergestellt, elektrisch leitfähig oder elektrisch isolierend ausgelegt sein, je nachdem, ob Ableiten von statischen Aufladungen durch den Betrieb oder Schutz vor Stromschlägen verfolgt wird.

Das Material, aus dem die Seilrollen-Einlageringe gefertigt sind, muss nicht nur elastisch und wenn möglich, gleichzeitig reibungsarm und verschleißfest sein, sondern muss auch ölbeständig sein. An dem Drahtseil haftet nämlich Schmiermittel, welches das Material sonst zersetzen und so zu einer Beschädigung der Seilrolle bzw. des Seilrollen-Einlageringes führen würde.

Nicht zuletzt müssen die Seilrollen-Einlageringe möglichst gleiche oder ähnliche Eigenschaften in einem möglichst großen Temperaturfenster bieten, sie müssen annähernd gleichermaßen bei minus 20 Grad im Winter und bei plus 20 Grad im Sommer funktionieren. Das Temperaturfenster ist sogar für -40 Grad bis +70 Grad ausgelegt. Auch das Abführen der Reibungs- und Walkwärme ist in diesem Zusammenhang zu bedenken.

Das Patent CH 495 911 A beschreibt in diesem Zusammenhang einen Seilrollen-Einlagering mit parallel zur Ringachse verlaufenden Einschnitten oder Spalten für eine verbesserte Wärmeabfuhr. Insbesondere Seilrollen-Einlageringe aus Kunststoff, üblicherweise zumeist auf der Basis von Polyurethan, sind im Allgemeinen zwar verschleißfester als solche aus Gummi, können sich aber bei hoher Belastung durch das Seil so stark erwärmen, dass sie platzen und dadurch unbrauchbar werden. Ebenso dehnt sich der Seilrollen-Einlagering infolge der großen Erwärmung aus, vergrößert dadurch seinen Innendurchmesser und verliert so seinen wünschenswerterweise möglichst festen Halt auf dem Rollenkörper.

Des Weiteren offenbart die CH 495 911 A auch eine Ausgestaltungsvariante eines Einlagerings, bei dem drei Ringe axial parallel angeordnet sind, wobei der innere Ring, der auch die Laufrille ausbildet, aus härterem Material sein kann als die beiden ihn flankierenden Ringe.

Die Patentschrift US 1,944,426 A hingegen offenbart eine metallische Seilrolle, bei der ein Gummiring in eine im Querschnitt rechteckige Ausnehmung eingeklebt ist. In diesen Gummiring wiederum kann ein U-förmiger Metallring eingegossen sein, der mit zwei Spitzen in die konkave Laufrille hineinragt. Die Anmeldung ist von 1931, aber so ein Seilrollen-Aufbau hat sich nie durchgesetzt, vermutlich, weil der Metallring innerhalb des Gummiringes nie gehalten hat.

Die Aufgabe der vorliegenden Erfindung ist, unter Vermeidung der oben aufgezeigten Nachteile, aber auch unter Erfüllung der oben aufgezählten mannigfaltigen Anforderungen, eine neue Seilrolle bzw. ein neues Seilrollen-Futter bzw. einen neuen Seilrollen-Einlagering zu stellen, die bzw. das bzw. der einerseits den Schall und die Vibrationen gut dämpft, andererseits reibungsoptimiert und verschleißfest ist und generell in den Eigenschaften, der Anwendung und der Haltbarkeit optimiert ist.

Die Erfindung ist durch die technischen Merkmale bzw. die Verfahrensschritte der unabhängigen Ansprüche definiert, mit zusätzlichen Merkmalen oder Schritten, die in den abhängigen Ansprüchen angegeben sind. Die Lösung der Aufgabe besteht zunächst in der Zusammensetzung eines neuartigen Verbundwerkstoffs oder Kompositmaterials für eine erfindungsgemäße Seilrolle bzw. einen einen erfindungsgemäßen Seilrollen-Einlagering. Dieser Verbundwerkstoff umfasst als erste Komponente ein elastisches Trägermaterial, das ein Elastomer in Form von Gummi, den Vulkanisaten von Natur- oder Silikonkautschuk oder in Form von elastischen Kunststoffen ist.

Die Shore-Härte A + D dieses Trägermaterials liegt in einem Bereich von 20 bis 110 und beträgt vorzugsweise 65.

Eine mindestens zweite Komponente des Verbundwerkstoffes sind Partikel oder Elemente oder Verschleißeinsätze - im Folgenden "Verbundelemente" genannt - aus mindestens einem zweiten Material oder Werkstoff, das oder der nicht elastisch, sondern fest und auch nicht flexibel ist und eine Mohshärte aufweist, die in einem Bereich von 2,5 bis 10 liegt und vorzugsweise mindestens eine Mohshärte von annähernd 8 beträgt. Somit kommen als weichste erfindungsgemäße Verbundelemente solche aus Leichtmetallen wie beispielsweise aus Scandium (Mohshärte 2,5) oder Aluminium (Mohshärte 2,75) noch in Betracht. Darüber hinaus aber auch andere Metalle, bis zu den härtesten Metallen wie etwa Titan, Vanadium, Osmium, Wolfram oder Chrom, das eine Mohshärte von 8,5 aufweist. Als nichtmetallische Werkstoffe für die erfindungsgemäßen harten, nicht elastischen Verbundelemente innerhalb des elastischen Trägermaterials kommen, ebenfalls in dem maximal angegebenen Mohshärten-Bereich von 2,5 bis 10, auch Duroplaste, glasfaser- oder kohlenstofffaserverstärkte Kunststoffe, Glas, Porzellan und Keramik in Betracht. Weiterhin kommen auch gesinterte Werkstoffe in Betracht, sei es metallurgische oder keramische. Des Weiteren kommen Kombinationen der oben genannten Werkstoffe in Betracht, insbesondere auch Güsse, Stähle oder Legierungen der aufgezählten, aber auch sonst bekannten oder geeigneten Metalle.

Wie bereits erwähnt, formt eine erfindungsgemäße Seilrolle bzw. ein erfindungsgemäßer Seilrollen-Einlagering eine Führungsnut bzw. Laufrille aus, in der das Seil geführt entlangläuft. Diese Laufrille ist üblicherweise etwas weniger als halbrund und konkav. Bei einem erfindungsgemäßen Seilrollen-Einlagering kann die Laufrille im Querschnitt auf herkömmliche Weise ebenfalls annähernd halbrund-konkav, oder aber auch im Querschnitt annähernd V-förmig sein. Es wurde nämlich erkannt, dass eine im Querschnitt V-förmige Laufrille unter Umständen aus zwei Gründen vorteilhaft sein kann.

Der erste Grund ist, dass ein Seil, welches wie allgemein üblich einen etwas kleineren Querschnittsdurchmesser als den (gedachten) Querschnittsdurchmesser der Laufrille hat, relativ punktuell am mittigen, tiefsten Punkt des Laufrillen-Querschnitts aufliegt. Es bildet sich somit ein hauptsächlicher, senkrecht ausgerichteter Kraftvektor, welcher in etwa der Traglast entspricht. Und je punktueller dieser Kraftvektor bzw. die Traglast wirkt, desto höher ist die Reibung an dieser punktuellen Fläche. Demzufolge ist es ein weiterer erfinderischer Lösungs-Teilaspekt der vorliegenden Anmeldung, ebenfalls ausgerichtet auf die Aufgabe Reibungsminderung, die herkömmliche, eine punktuelle Fläche an der Sohle der Laufrille auf zwei punktuelle Flächen an Flanken der im Querschnitt V-förmigen Laufrille aufzuteilen. Der Boden oder die Spitze des Vs bleibt hierbei vorzugsweise vom Seil unberührt.

Der zweite Grund ist, dass in einer im Querschnitt annähernd halbrund-konkaven Laufrille unvorteilhafter Schlupf auftritt. Wenn man nämlich das Seil im Querschnitt betrachtet, wie es in der Laufrille aufliegt, so entspricht ein tiefster Auflagepunkt im Boden der Laufrille einem kleinsten Außendurchmesser der Seilrolle bzw. des Seilrollen-Einlageringes. Die beiden äußeren Auflagepunkte des Seiles innerhalb der Laufrille liegen jedoch auf einem größeren Außendurchmesser der Seilrolle bzw. des Seilrollen-Einlageringes. Diese Auflagepunkte haben, weil sie sich auf unterschiedlichen Außendurchmessern befinden, unterschiedliche Umlaufgeschwindigkeiten. Das wiederum heißt, dass wenn die niedrigere, kreisbahnförmige Umlaufgeschwindigkeit des laufrinnen-proximalen, inneren Auflagepunktes und kleineren Außendurchmessers der linearen Seilgeschwindigkeit entsprechen sollte, so eilt die Zone rund um den laufrinnen-distalen, äußeren Auflagepunkt und größeren Außendurchmessers voraus, mit einem positiven Schlupf am Seil. Und wenn der letztere, äußere Auflagepunkt der linearen Seilgeschwindigkeit entsprechen sollte, so herrscht im inneren Bereich ein negativer Schlupf. Dieser Schlupf, ob positiv oder negativ, äußert sich jedenfalls in erhöhter Reibung und tritt bei einer im Querschnitt V-förmigen Laufrille bei Weitem nicht so stark auf.

Ein weiterer Vorteil einer im Querschnitt V-förmigen Laufrille ist, dass unterschiedliche Seildurchmesser weniger als bei einer im Querschnitt annähernd halbrund-konkaven Laufrille relevant sind. Es ist annähernd egal, welchen Außendurchmesser das Seil hat, es passt nämlich mit einem größeren Bereich von unterschiedlichen Außendurchmessern besser in die im Querschnitt V-förmige Laufrille als in eine im Querschnitt halbrund-konkave.

Sei es, ob nun eine im Querschnitt halbrund-konkave oder eine V-förmige Laufrille vorgesehen ist, sind die erfindungsgemäßen Verbundelemente vorzugsweise bei der Herstellung des Seilrollen-Einlageringes direkt beim Formgießen in die Mantelfläche mit eingegossen. Die Laufrille kann ebenfalls formgegossen oder aber auch spanabhebend ausgeschliffen oder herausgedreht sein. In diesem Zusammenhang ist es bei einem möglichen Herstellungsverfahren eines erfindungsgemäßen Seilrollen-Einlageringes vorgesehen, die letztgenannten spanabhebenden Verfahren bei der Herstellung zu bevorzugen. Wenn nämlich der erfindungsgemäße Verbundwerkstoff gegossen wird und die Verschleißeinsätze bzw. Verbundelemente einfach beim Gießen mit hineingemischt werden, so werden diese in der großen Mehrheit von dem Trägermaterial eingeschlossen sein und keine nennenswerte Kontaktoberfläche zu dem Seil ausformen.

Demzufolge ist es bevorzugt, die Laufrille herauszuschleifen und auf diese Weise einerseits eine größere Anzahl von Kontaktoberflächen der Verbundelemente auszuarbeiten, mit welchen sie mit den Stahllitzen des Drahtseiles oder generell gesagt der Litzen-Außenoberfläche des Seiles in Haftungskontakt kommen. Andererseits ist es auf diese Weise weiterhin erfindungsgemäß gewährleistet, dass die Kontaktoberflächen der Verbundelemente annähernd bündig mit der sie umgebenden Trägermaterial-Oberfläche des Seilrollen-Einlageringes bzw. der Laufrille abschließen.

Einerseits ist es nämlich erfindungsgemäßes Ziel, zugunsten der Dämpfungsabsorption einen Kontakt des Seiles sowohl zu dem Elastomer bzw. dem elastischen Trägermaterial, als auch zu den Kontaktoberflächen der Verbundelemente zu bekommen, Dort, wo das Seil mit dem elastischen Trägermaterial Kontakt hat, ist unverändert eine gute Dämpfungsabsorption gegeben. Dort hingegen, wo das Seil Kontakt zu den Verbundelementen hat, ist immer noch relativ gute Dämpfungsabsorption gewährleistet, weil die Verbundelemente quasi federnd in dem elastischen Trägermaterial eingebettet sind.

Andererseits ist es erfindungsgemäßes Ziel, die Reibung zwischen Seil und Seilrollen-Einlagering zu minimieren. Bei herkömmlichen Seilrollen-Einlageringen entspricht der Kontakt einer Fläche Fl_{K}, noch multipliziert mit einem eventuellen Umschlingungswinkel, falls zutreffend. Die Haftreibung dieser Fläche Fl_{K} ist herkömmlich jedenfalls ausschließlich durch die Haftreibungszahl von Stahl auf Gummi definiert, die in etwa 0,6 beträgt. Bei einer erfindungsgemäßen Kontaktfläche hingegen ist die Haftreibung um denjenigen Flächenanteil minimiert, welcher der Summe der Kontaktflächen der Verbundelemente entspricht. Die spezifische Haftreibungszahl des Werkstoffes, aus dem die Verbundelemente gefertigt sind, liegt mit dem Stahl der Drahtseil-Litzen erfindungsgemäß in einem Bereich von 0,02 bis 0,6 und beträgt vorzugsweise annähernd 0,2.

Das angestrebte Verhältnis zwischen Verbundelemente-Kontaktoberfläche und Trägermaterial-Oberfläche ist vorzugsweise 50:50 % und liegt weiterhin vorzugsweise in einem Bereich von 10:90 % bis 100:0 %. Im Falle eines Drahtseiles mit Stahllitzen ist die Haftreibung von Stahl auf Gummi gleich µ₁ = 0,6. Die Haftreibung von Stahl auf Keramik hingegen ist gleich µ₂ = 0,2. Die kombinierte Haftreibung µ_{K} ist somit µ_{K} = (µ₁ + µ₂) / 2 = 0,4. Ein Faktor P, um den sich die Haftreibung reduziert, ist somit P = 2 x µ₁ / (µ₁ + µ₂) = 1,5.

Eine weitere Größe, die Reibung und Erwärmung der Seilrolle bzw. des Seilrollen-Einlageringes verursacht, ist der sogenannte Seil- oder Litzendrall. Durch das lineare Abrollen eines einerseits rauen und andererseits gedrehten, geflochtenen oder vielmehr sogenannten "geschlagenen" Drahtseils erzeugen die einzelnen Litzenpakete einen schraubenförmigen Drall beim Abrollen, der sich auf einer seitlich fix montierten Rolle als seitlich zur Abrollrichtung gerichtete Reibungskraft äußert. Aber auch diese Reibung ist erfindungsgemäß reduziert, durch die erfindungsgemäße Minimierung der Kontaktfläche des Drahtseiles alleinig zu weichem Elastomer.

Die vorliegende Erfindung ist nicht auf Drahtseile mit Stahllitzen beschränkt, sei es auf herkömmliche offene, mit üblicherweise sechs oder mehr Litzenpaketen um einen Kunststoff-Kern herum, oder auf sogenannte geschlossene Seile, beispielsweise mit S-förmigen Umhüllungs-Filamenten ummantelt, die ineinandergreifen. Die sogenannten geschlossenen Seile sind als Tragseile vor allem bei Pendelbahnen üblich und können nicht zu Endlos-Seilen gesplissen werden. Es gibt des Weiteren beispielsweise Seile, in die zwischen Stahllitzen eine oder mehrere Kunststoff-Litzen oder Stränge oder Kerne eingeschlagen sind oder Kevlar- oder Aramidfasern. Es kommen auch vermehrt Seile zum Einsatz, die aus Litzen aus den letztgenannten Fasern geschlagen sind. Es wird im Folgenden somit generell von einer "Litzen-Außenoberfläche" bzw. einem "Litzen-Außenmaterial" gesprochen, zu dem die erfindungsgemäßen Verbundelemente im Vergleich zu Gummi immer eine signifikante Reibungsminderung bringen.

Der Einfachheit halber wurde auf die Rollreibung nicht eingegangen. Die Werte der spezifischen Haftreibung sind für die erfindungsgemäße Auswahl der Werkstoffe hinreichend aussagekräftig.

Wenn die Verbundelemente beim Gießen in das Trägermaterial hineingemischt werden, so sind sie in der Folge auch relativ beliebig darin angeordnet. Bei einer weiteren Ausgestaltungsvariante einer erfindungsgemäßen Seilrolle bzw. eines erfindungsgemäßen Seilrollen-Einlageringes sind die Verbundelemente jedoch nicht beliebig, sondern in mindestens einer Reihe von einzelnen Verbundelementen in der Führungsnut bzw. Laufrille angeordnet, vorzugsweise dergestalt, dass eine Vielzahl von weiterhin vorzugsweise identisch ausgeformten Verbundelementen sich wiederholend und voneinander beabstandet an dem gesamten Umfang des Einlagenringes bzw. der Laufrille eingesetzt sind.

Die Verbundelemente können hierbei in das Trägermaterial des Seilrollen-Einlageringes eingegossen oder einvulkanisiert sein, aber auch in nachträglich oder beim Gießen gefertigte Hohlräume eingesetzt, eingepresst oder eingeklebt sein. Des Weiteren können sie auch formschlüssig eingeschraubt oder bajonettverschlussartig fixiert sein.

Auch die zuletzt beschriebenen, quasi positionsgebunden eingegossenen, einvulkanisierten oder nachträglich eingesetzten Verbundelemente formen vorzugsweise jeweils eine Oberfläche als Kontaktfläche zu dem Seil aus, mit der sie nicht aus der Oberfläche des Seilrollen-Einlageringes bzw. der Laufrille herausragen, sondern annähernd bündig mit ihr abschließen oder leicht tiefer sind.

Wie bereits erwähnt, können die Verbundelemente aus Keramik sein, wobei hierfür beispielsweise Aluminiumoxid in Betracht kommt, dem optional zur Erhöhung seiner Festigkeit Zirkonoxid beigesetzt sein kann. Weitere beispielhafte Keramiken sind Berylliumoxid, Bornitrid oder Borcarbid oder aber auch Siliciumcarbid, das weiterhin optional kohlefaserverstärkt sein kann.

Das US-Patent US 8,196,738 B1 offenbart eine Antriebsrolle für ein Förderband, wobei in der zylindrischen Mantelfläche der Antriebsrolle Keramik-Plättchen angeordnet sind. Der Einsatzbereich dieser Antriebsrollen ist jedoch ein anderer als derjenige von den erfindungsgemäßen Seilrollen bzw. Seilrollen-Einlageringen, d.h., es wird unter nassen, schlammigen und rutschigen Bedingungen eine Reibungserhöhung zwischen Antriebsrolle und Förderband gesucht. Demzufolge ist es vorgesehen, dass die Keramik-Plättchen aus der zylindrischen Mantelfläche der Antriebsrolle herausragen und sich mit der Innen-Lauffläche des Förderbandes verzahnen. Das Förderband wiederum ist aus Gummi. Es findet also kein Kontakt bzw. eine Einflussnahme auf die Reibung zwischen einer (nicht antreibenden) Gummirolle und einem darauf laufenden Drahtseil wie bei der vorliegenden Erfindung statt. Die Anordnung von Keramik-Plättchen an der Förderband-Antriebsrolle führt zu einem erhöhten Verschleiß der Innenfläche des Förderbandes. Der Komfort der Übertragung ist egal. Die vorliegende Erfindung sucht hingegen Lösungen zur Reibungsminimierung und zur Reduktion des Verschleißes, unter Beibehaltung oder zumindest Beachtung des Komforts.

Die Internationale Veröffentlichungsschrift WO 2013/122983 A1 offenbart Keramik-Plättchen, erneut in einer Antriebsrolle eines Förderbandes, die auf besondere Weise angeordnet und ausgeformt sind, sodass sich deren Halt in dem Material der Antriebsrolle verbessert.

Gemäß einer einfachen Basis-Ausgestaltungsvariante einer erfindungsgemäßen Seilrolle bzw. eines erfindungsgemäßen Seilrollen-Einlageringes sind einzelne zylinderförmige Verbundelemente vorzugsweise in korrespondierende Bohrungen in dem elastischen Trägermaterial des Seilrollen-Einlageringes eingeklebt. Weiterhin vorzugsweise sind die Verbundelemente in mindestens einer Reihe innerhalb der Laufrille angeordnet. Die Reihe kann geradlinig sein oder auch eine Zickzack-Reihe sein, alles sowohl in einer im Querschnitt halbrund-konkaven Laufrille, als auch alternativ in einer im Querschnitt V-förmigen.

Es ist ein weiterer erfinderischer Teilaspekt der vorliegenden Erfindung, dass eine erfindungsgemäße Seilrolle bzw. ein erfindungsgemäßer Seilrollen-Einlagering Verbundelemente an dem Umfang der Laufrille angeordnet haben kann, und zwar in einer definierten, ersten Periodizität. Diese Anordnungs-Periodizität ist vorzugsweise auf eine zweite Periodizität abgestimmt, die der sogenannte Seilschlag des Seiles erzeugt. Diese beiden Periodizitäten sind vorzugsweise so synchron aufeinander abgestimmt, dass jeweils ein Seilschlag mit einer Zone von elastischem Trägermaterial zwischen zwei Verbundelementen übereinstimmt und so weitestgehend oder bestmöglich eliminiert wird. Es wird sich in Feldversuchen eventuell noch zeigen, ob der Seilschlag in der Lage ist, automatisch die Seilrollen bzw. die Seilrollen-Einlageringe synchron auszurichten, quasi sich selbst justierend.

Die Form der Verbundelemente betreffend, ist bereits erwähnt worden, dass sie die Form eines regelmäßigen Zylinders haben können. Es sind jedoch auch konische, also Kegelstümpfe, oder bombierte Zylinder denkbar, oder sich in der Mitte verjüngende. Des Weiteren kommen Prismen, Walzen, Kugeln, Pyramiden, Quader und Würfel in Betracht. Grundsätzlich sind alle erdenklichen Formen möglich, die jedoch vorzugsweise eine oberseitige Kontaktoberfläche ausformen und weiterhin vorzugsweise, aber nicht zwingend, auch eine unterseitige Grund- oder Stützfläche aufweisen. Alle genannten Formen können als volle Körper ausgestaltet sein oder Hohlräume aufweisen.

Eine weitere Grundform, die für die Ausgestaltung der Verbundelemente in Betracht kommt, sind steg- oder brückenförmige Elemente. Diese können sich wiederholend oder aber auch relativ eng aneinander aufgereiht in der Laufrille angeordnet sein oder sogar selber mittels einer konkaven Ausnehmung die Laufrille ausformen.

Die letztbeschriebenen Stege oder auch andere oben offenbarten Formen mit einer länglichen Ausrichtung können axial angeordnet sein, d.h., mit ihrer länglichen Ausrichtung quer zur Laufrichtung der Seilrolle bzw. des Seilrollen-Einlageringes. Genau so gut sind aber auch radiale Anordnungen denkbar oder sogar schräge oder hiervon kombinierte Anordnungen.

Es ist optional möglich, die einzelnen, sich wiederholend angeordneten Verbundelemente nicht nur einzeln in dem Trägermaterial einzubetten, sondern sie alle oder nur einen Teil miteinander zu verbinden. Dieses kann dann einen einteiligen Segmente-Kranz oder Verbundelemente-Ring ergeben, an dem die einzelnen Verbundelemente wie Segmente angeordnet sind, oder aber auch mehrere Kranz-Segmente, die nur einen Teil der Verbundelemente verbinden. Die Verbindung selber kann aus dem gleichen Material wie die Verbundelemente bestehen oder aber auch mittels eines anderweitigen Ringes oder Bandes aus einem anderen Material oder mittels eines Seiles oder Netzes realisiert sein.

Es ist bei einer erfindungsgemäßen Seilrolle bzw. einem erfindungsgemäßen Seilrollen-Einlagering weiterhin optional möglich, die beschriebenen unterschiedlichen Formen von Verbundelementen in einer erfindungsgemäßen Seilrolle bzw. einem erfindungsgemäßen Seilrollen-Einlagering zu kombinieren, woraus sich unter Umständen unterschiedliche Vibrations- und Schalldämpfungseigenschaften erreichen lassen.

Alle beschriebenen Ausgestaltungsvarianten von Verbundelementen können, vorzugsweise an ihrer Mantelfläche angeordnet, mindestens eine Schulter oder Kragen ausformen. In Betracht kommt auch ein Gewinde oder eine Riffelung oder Rändelung oder sonstige Maßnahmen zur Erhöhung der OberflächenRauheit und somit Verbesserung des Sitzes der Verbundelemente in ihren Trägermaterial-Bohrungen oder -Ausnehmungen.

Alle beschriebenen Formen von Verbundelementen können in korrespondierend formschlüssig ausgeformten Trägermaterial-Bohrungen oder -Ausnehmungen eingesetzt, eingeklebt, einvulkanisiert oder aber auch nur in einem Presssitz eingesetzt sein. So kann es beispielsweise vorgesehen sein, dass ein beispielsweise zylinderförmiges Verbundelement mit Außengewinde in eine Bohrung mit entsprechendem Innengewinde einschraubbar ist oder aber auch, dass ein vorhin beschriebener Kragen in eine formschlüssig korrespondierende Nut einsetzbar ist.

Die Verbundelemente können auch in Hülsen eingesetzt sein, die wiederum in das Trägermaterial auf die genannten stoff- oder formschlüssigen Befestigungsarten angeordnet sind. Die Hülsen können grundsätzlich aus dem gleichen Material wie die Verbundelemente selbst ausgestaltet sein oder aber auch aus beliebigen anderen, je nachdem, ob ein relativ fester Sitz oder ein Gleiten des Verbundelementes in der Hülse gesucht ist.

Die eingesetzten Verbundelemente können die Trägermaterial-Bohrungen oder -Ausnehmungen komplett ausfüllen. Es ist aber auch möglich, bewusst Hohlräume in den Bohrungen übrig zu lassen und auf diese Weise Einfluss auf die Dämpfung zu nehmen, weil die Hohlräume z.B. weniger dämpfen als das volle Material. Es können Verbundelemente vorgesehen sein, die beispielsweise unterhalb ihrer Grund- oder Stützfläche einen weiterhin beispielsweise mit Luft gefüllten Hohlraum haben. Optional können Kanäle in den Verbundelementen vorgesehen sein, um die Luft aus diesen Hohlräumen unter Last dämpfend entweichen zu lassen.

Bei einer weiteren Ausgestaltungsvariante einer erfindungsgemäßen Seilrolle bzw. eines erfindungsgemäßen Seilrollen-Einlageringes ist es vorgesehen, sie oder ihn aus mindestens zwei Hälften zusammenzusetzen. Hierfür kommt Vulkanisation oder Verkleben in Betracht, für Letzteres stehen heutzutage so gute Klebstoffe zur Verfügung, dass die Klebeverbindung sogar eine höhere Festigkeit als das zusammengeklebte Material selbst hat. Die Klebeseiten der Hälften weisen vorzugsweise die Ausnehmungen für die Verbundelemente beim Zusammenkleben bereits auf und diese werden vorzugsweise mitverklebt.

In Betracht kommt auch eine Ausgestaltungsvariante einer weiterhin neuartigen, erfindungsgemäßen Seilrolle bzw. eines erfindungsgemäßen Seilrollen-Einlageringes, der mehrere axiale Scheiben bzw. Einzelringe umfasst, also quasi eine vertikale bzw. axiale Sandwich-Anordnung darstellt. So könnten beispielsweise die Randschulter-Bereiche aus zwei äußeren Seitenscheiben aus weicherem Material bestehen und der Laufrillen-Bereich - mit oder ohne eingesetzten Verbundelementen - aus einer Mittelscheibe aus einem härteren Material. Oder aber auch umgekehrt, die Außenscheiben hart und die Mittelscheibe weich. Hierbei können die axialen Einzelringe aus unterschiedlichen Materialien ausgesucht sein oder aber auch aus demselben, nur mit unterschiedlicher Härte.

Des Weiteren kann eine nochmals weitere Ausgestaltungsvariante einer erfindungsgemäßen Seilrolle bzw. eines erfindungsgemäßen Seilrollen-Einlageringes aus mindestens zwei konzentrischen Einzelringen gebildet sein. Dieses wäre dann, wenn man so will, ein horizontaler, radialer Sandwich-Aufbau. Ein innerer, kleinerer Einzelring kann hierbei beispielsweise aus einem etwas weicheren Elastomer bzw. Trägermaterial bestehen als ein äußerer, größerer Einzelring und diese beiden Einzelringe sind erneut vulkanisiert oder miteinander verklebt. In dem äußeren Einzelring müssen nicht, aber können Verbundelemente angeordnet sein. Letzteres vorzugsweise in einer Art von Fassungen mehr oder weniger beweglich eingesetzt, sodass sie sich mit ihrer Grund- oder Stützfläche mehrheitlich auf dem weicheren, inneren Ring abstützen. Bei Bedarf ist umgekehrt auch ein härterer innerer Einzelring und ein weicherer äußerer Einzelring möglich. Des Weiteren aber auch eine Ausgestaltungsvariante mit einem härteren inneren Einzelring - für einen guten, fixen Sitz auf dem Rollenkörper -, mit einem ebenfalls härteren äußeren Einzelring wie vorhin auch, und mit einem zwischen diesen beiden Einzelringen angeordneten, weichen dritten Mittel- oder Kernring. All diese Anordnungen, sei es mit axialen oder radialen Einzelringen oder Kombinationen hiervon, können mit oder aber auch ohne die offenbarten Verbundelemente realisiert sein, aus unterschiedlichen Materialien oder den gleichen mit unterschiedlicher Härte. Und wenn Verbundelemente angeordnet sind, so können sie bei diesen Ausgestaltungsvarianten aus mehreren Einzelringen optional nur in den maßgeblichen Einzelringen angeordnet sein, die Kontakt zum Seil haben.

Die axialen oder radialen Einzelringe können miteinander verklebt oder vulkanisiert sein, es kommt aber auch 3D-Druck in Betracht, mit dem auch der "Druck" der Einzelringe oder sogar eines einteiligen Seilrollen-Einlageringes aus unterschiedlichen Materialien möglich ist bzw. die Materialien ineinander übergehen.

Auf diese im Gesamten beschriebene Weise ist mindestens ein neuartiger "Hybrid-Seilrollen-Einlagering" oder mindestens ein neuartiges "Hybrid-Futter" offenbart, sei es den Verbund von einem ersten, weichen Trägermaterial und mindestens einem darin angeordneten, zweiten, harten Material betreffend, aber auch den Verbund von unterschiedlich harten Einzelringen. In diesem Zusammenhang wird hiermit zusätzlich zu Absatz [0017] offenbart, dass grundsätzlich auch das Trägermaterial und das Verbundelemente-Material identisch sein können, aber erfindungsgemäß nur von unterschiedlicher Härte.

Die offenbarten unterschiedlichen Ausgestaltungsvarianten einer erfindungsgemäßen Seilrolle bzw. eines erfindungsgemäßen Seilrollen-Einlageringes sind hinsichtlich der nicht grundfunktionsrelevanten Merkmale beliebig miteinander kombinierbar. So sind beispielsweise alle beschriebenen Ausgestaltungsvarianten eines Seilrollen-Einlageringes mit im Querschnitt halbrund-konkaver Laufrille mit den beschriebenen unterschiedlichen Ausgestaltungsvarianten betreffend Anordnung, Material oder Form der Verbundelemente kombinierbar, gleichermaßen wie die beschriebenen Ausgestaltungsvarianten eines Seilrollen-Einlageringes mit im Querschnitt V-förmiger Laufrille. Alle die sich hieraus ergebenden Kombinationen sind wiederum kombinierbar mit den unterschiedlichen Ausgestaltungsvarianten betreffend axialem oder radialem Sandwich-Aufbau. Des Weiteren sind die offenbarten Verbundelemente selbst miteinander kombinierbar, d.h., es können unterschiedliche Verbundelemente in einer Seilrolle bzw. einem Seilrollen-Einlagering verwendet werden.

Die vorliegende Patentschrift offenbart ein erstes Verfahren zur Herstellung eines wie offenbarten Seilrollen-Einlageringes, unter Ausführung folgender grundsätzlicher Verfahrensschritte:
a) - Vorbereiten einer Guss- bzw. Vulkanisierform durch Einsetzen von Befestigungsstempeln in eine Befestigungsbohrung von Verbundelementen;
b) - Einsetzen und Positionieren der Befestigungsstempel mit den Verbundelementen in eine jeweilige Positionier-Bohrung der Guss- bzw. Vulkanisierform;
c) - Sichern der Befestigungsstempel in der Positionier-Bohrung mittels einer Sicherung;
d) - Gießen und Vulkanisieren eines Seilrollen-Einlagering-Rohlings;
e) - Entfernen der Guss- bzw. Vulkanisierform;
f) - Brechen der Befestigungsstempel an einer jeweiligen Sollbruchstelle.

Ein erfindungsgemäßer Seilrollen-Einlagering bringt folgende Vorteile:
- Die Reibung zwischen Seil und Seilrollen-Einlagering ist deutlich reduziert.
- Die Seilrollen bzw. Seilrollen-Einlageringe haben eine höhere Laufleistung.
- Die Seilrollen bzw. Seilrollen-Einlageringe haben eine längere Lebensdauer.
- Durch die höhere Laufleistung bzw. längere Lebensdauer sind sie ökologisch nachhaltiger.
- Der durch die höhere Laufleistung bzw. längere Lebensdauer verminderte Wartungsaufwand macht sie ebenfalls ökologisch nachhaltiger.
- Die höhere Laufleistung bzw. längere Lebensdauer macht die höheren Herstellungskosten wett.
- Die Stillstand-Zeiten der Seilbahnanlage sind minimiert.
- Die Betriebskosten der Seilbahnanlage sind generell gesenkt.
- Die Seilbahnanlage kann mit höheren Seilgeschwindigkeiten betrieben werden.
- Eine gute Dämpfung ist nach wie vor gewährleistet.
- Falls vorgesehen, ist durch eine spezielle Anordnung der Verbundelemente der Seilschlag amortisiert.
- Die Wärmeentwicklung einer erfindungsgemäßen Seilrolle bzw. eines erfindungsgemäßen Seilrollen-Einlageringes ist reduziert.
- Eine erfindungsgemäße Seilrolle bzw. erfindungsgemäßer Seilrollen-Einlagering altert aufgrund der geringeren Temperaturschwankungen zwischen Nichtbetrieb und Betrieb langsamer.
- Es können höhere Lastkollektive gefahren werden.

Weitere oder vorteilhafte Ausgestaltungen eines erfindungsgemäßen Seilrollen-Einlageringes bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen dabei
Fig. 1 eine schematische und perspektivische Darstellung einer beispielhaften ersten Ausgestaltungsvariante eines erfindungsgemäßen Seilrollen-Einlageringes mit beliebig angeordneten Verbundelementen in einer im Querschnitt annähernd halbrund-konkaven Laufrille;
Fig. 2 eine schematische Schnittansicht der beispielhaften ersten Ausgestaltungsvariante des erfindungsgemäßen Seilrollen-Einlageringes aus der Fig. 1, im Zusammenwirken mit einem Drahtseil;
Fig. 3 eine schematische und perspektivische Darstellung einer beispielhaften zweiten Ausgestaltungsvariante eines erfindungsgemäßen Seilrollen-Einlageringes mit beliebig angeordneten Verbundelementen in einer im Querschnitt V-förmigen Laufrille;
Fig. 4 eine schematische Schnittansicht der beispielhaften zweiten Ausgestaltungsvariante des erfindungsgemäßen Seilrollen-Einlageringes aus der Fig. 3, im Zusammenwirken mit einem Drahtseil;
Fig. 5 eine schematische und perspektivische Darstellung einer beispielhaften dritten Ausgestaltungsvariante eines erfindungsgemäßen Seilrollen-Einlageringes mit in einer Reihe angeordneten Verbundelementen in einer im Querschnitt annähernd halbrund-konkaven Laufrille;
Fig. 6 eine schematische Schnittansicht der beispielhaften dritten Ausgestaltungsvariante des erfindungsgemäßen Seilrollen-Einlageringes aus der Fig. 5, im Zusammenwirken mit einem Drahtseil;
Fig. 7 eine schematische und perspektivische Darstellung einer beispielhaften vierten Ausgestaltungsvariante eines erfindungsgemäßen Seilrollen-Einlageringes mit einer im Querschnitt V-förmigen Laufrille, an deren Flanken je eine Reihe Verbundelemente angeordnet sind;
Fig. 8 eine schematische Schnittansicht der beispielhaften vierten Ausgestaltungsvariante des erfindungsgemäßen Seilrollen-Einlageringes aus der Fig. 7, im Zusammenwirken mit einem Drahtseil;
Fig. 9 eine schematische und perspektivische Darstellung einer beispielhaften fünften Ausgestaltungsvariante eines erfindungsgemäßen Seilrollen-Einlageringes mit einer im Querschnitt annähernd halbrund-konkaven Laufrille, in der drei Reihen von Verbundelementen angeordnet sind;
Fig. 10 eine schematische Schnittansicht der beispielhaften fünften Ausgestaltungsvariante des erfindungsgemäßen Seilrollen-Einlageringes aus der Fig. 9, im Zusammenwirken mit einem Drahtseil;
Fig. 11 eine schematische Schnittansicht von einer beispielhaften sechsten Ausgestaltungsvariante eines erfindungsgemäßen Seilrollen-Einlageringes, auf dem ein Seil abrollt;
Fig. 12 eine schematische und perspektivische Darstellung einer beispielhaften siebten Ausgestaltungsvariante eines erfindungsgemäßen Seilrollen-Einlageringes mit einer im Querschnitt annähernd halbrund-konkaven Laufrille, in der zwei Reihen von Verbundelementen anordenbar sind;
Fig. 12a eine schematische und beispielhafte Darstellung von möglichen Formen, welche die Verbundelemente aufweisen können;
Fig. 13 eine schematische und perspektivische Darstellung einer beispielhaften achten Ausgestaltungsvariante eines erfindungsgemäßen Seilrollen-Einlageringes mit einer im Querschnitt annähernd halbrund-konkaven Laufrille, die von stegförmigen, in einer Reihe angeordneten Verbundelementen gebildet ist;
Fig. 13a eine schematische und perspektivische Darstellung eines einzelnen stegförmigen Verbundelements;
Fig. 14 eine schematische Schnittansicht der beispielhaften achten Ausgestaltungsvariante des erfindungsgemäßen Seilrollen-Einlageringes aus der Fig. 13, im Zusammenwirken mit einem Drahtseil;
Fig. 15 eine schematische und perspektivische Darstellung einer beispielhaften neunten Ausgestaltungsvariante eines erfindungsgemäßen Seilrollen-Einlageringes mit einer im Querschnitt annähernd halbrund-konkaven Laufrille, die von stegförmigen Segmenten an einem Segmente-Kranz gebildet ist;
Fig. 15a eine schematische und perspektivische Darstellung des Segmente-Kranzes der Ausgestaltungsvariante eines weiterhin erfindungsgemäßen Seilrollen-Einlageringes aus der Fig. 15;
Fig. 16 eine schematische Schnittansicht einer beispielhaften zehnten Ausgestaltungsvariante eines erfindungsgemäßen Seilrollen-Einlageringes mit mindestens einem stempelförmigen Verbundelement, gefasst in einem härteren Außenring und abgestützt auf einem Innenring;
Fig. 17a eine weitere schematische Schnittansicht einer beispielhaften elften Ausgestaltungsvariante eines erfindungsgemäßen Seilrollen-Einlageringes, mit mindestens einem Verbundelement in einer Ausnehmung, wobei in der Ausnehmung Hohlräume übrig bleiben;
Fig. 17b eine schematische Draufsicht auf so ein Verbundelement;
Fig. 17c eine schematische Schnittansicht, ein mögliches erfindungsgemäßes Herstellungsverfahren eines erfindungsgemäßen Seilrollen-Einlageringes betreffend;
Fig. 18 eine schematische und perspektivische Darstellung von mindestens drei axial angeordneten Einzelringen, die zu einer weiteren, zwölften Ausgestaltungsvariante eines weiterhin erfindungsgemäßen Seilrollen-Einlageringes zusammensetzbar sind und
Fig. 19 eine schematische Schnittansicht einer dreizehnten Ausgestaltungsvariante eines weiterhin erfindungsgemäßen Seilrollen-Einlageringes, der mindestens drei radial zusammengesetzte Einzelringe umfasst.

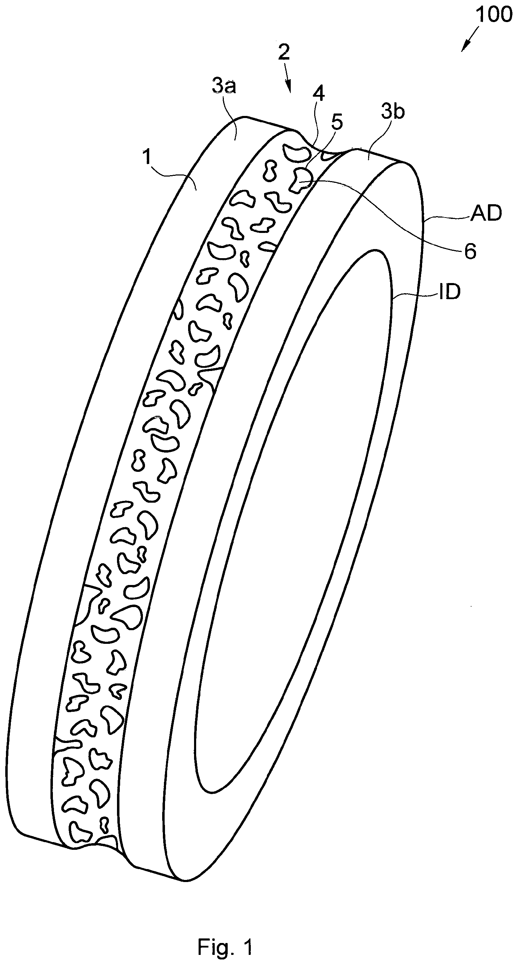

Die Fig. 1 zeigt in einer schematischen und perspektivischen Darstellung eine erste Ausgestaltungsvariante eines erfindungsgemäßen Seilrollen-Einlageringes 100, mit einem Ringkorpus oder Trägermaterial 1, das wiederum einen Außendurchmesser AD und einen Inndurchmesser ID ausformt. Des Weiteren bildet eine Mantelfläche 2 des Ringkorpus 1 eine linke Randschulter 3a und eine rechte 3b aus. Dazwischen ist eine Laufrille 4 angeordnet, die annähernd halbrund-konkav und vorzugsweise ausgeschliffen ist, sodass Verbundelemente 5 mit einer jeweiligen Kontaktoberfläche 6 annähernd bündig mit der Oberfläche der Laufrille 4 abschließen.

Die Verbundelemente 5 können beim Formgießen des Trägermaterials 1 in beliebiger Anordnung und Dichte beigemischt worden sein und sind somit im gesamten Trägermaterial 1 verteilt, aber nur bei der herausgeschliffenen Laufrille 4 sichtbar.

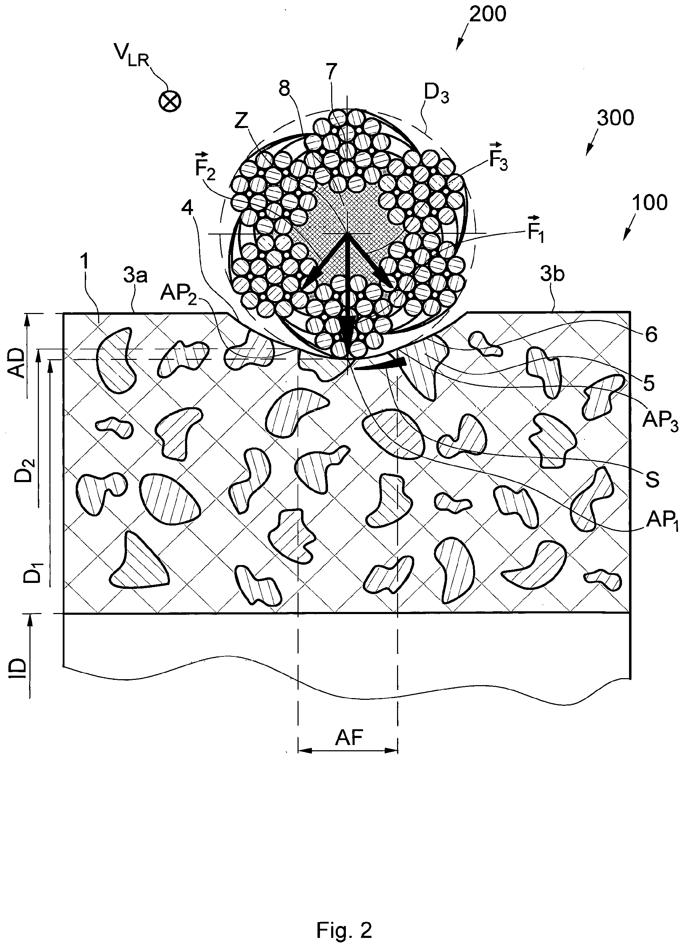

In der Fig. 2 ist die Ausgestaltungsvariante eines erfindungsgemäßen Seilrollen-Einlageringes 100 aus der Fig. 1 geschnitten dargestellt. Hierbei ist gezeigt, wie beim Betrieb einer Seilrolle 300 ein Seil oder Drahtseil 200 in der Laufrille 4 aufliegen würde. Das Drahtseil 200 umfasst Litzen bzw. ein Litzen-Außenmaterial 7, das um einen Seilkern 8 geschlagen ist. Aufgrund des Seildralles ergibt sich für das Litzen-Außenmaterial 7 auf einem gedachten Durchmesser D₃ eine Auflagefläche AF als Segment davon.

Das Seil 200 liegt also in der Laufrille 4 mit der Auflagefläche AF auf, mit einem tiefsten Auflagepunkt AP₁ und zwei äußeren Auflagepunkten AP₂ und AP₃. Nur schematisch angedeutet, wirkt aus einem Zentrum Z des Seiles 200 heraus ein größerer Kraftvektor F₁ in Richtung des Auflagepunktes AP₁ und jeweils ein kleinerer Kraftvektor F₂, F₃ in Richtung der Auflagepunkte AP₂ und AP₃. Die beiden letzteren Auflagepunkte AP₂ und AP₃ liegen auf einem Durchmesser D₂, der größer als ein Durchmesser D₁ ist, welcher dem Auflagepunkt AP₁ entspricht. Da Punkte auf einem größeren Durchmesser eine höhere Umlaufgeschwindigkeit als Punkte auf einem kleineren Durchmesser haben, laufen die Flanken der Laufrille 4 einer Fortbewegung bzw. Rotation der Seilrolle 100 in dem Auflagepunkt AP₁ voraus. In einer Näherung wird eine Laufrichtungsgeschwindigkeit V_{LR} des Seiles 200 der Rotationsgeschwindigkeit des Auflagepunktes AP₁ entsprechen, jedoch nicht den Rotationsgeschwindigkeiten der äußeren Auflagepunkte AP₂ und AP₃. Somit tritt ein symbolisch dargestellter Schlupf S auf, der nach außen hin zunimmt.

Weitere, in dieser Fig. 2 angezeigte, aber jetzt in deren Beschreibung nicht mehr erwähnte Bezugszeichen sind aus der Fig. 1 bereits bekannt.

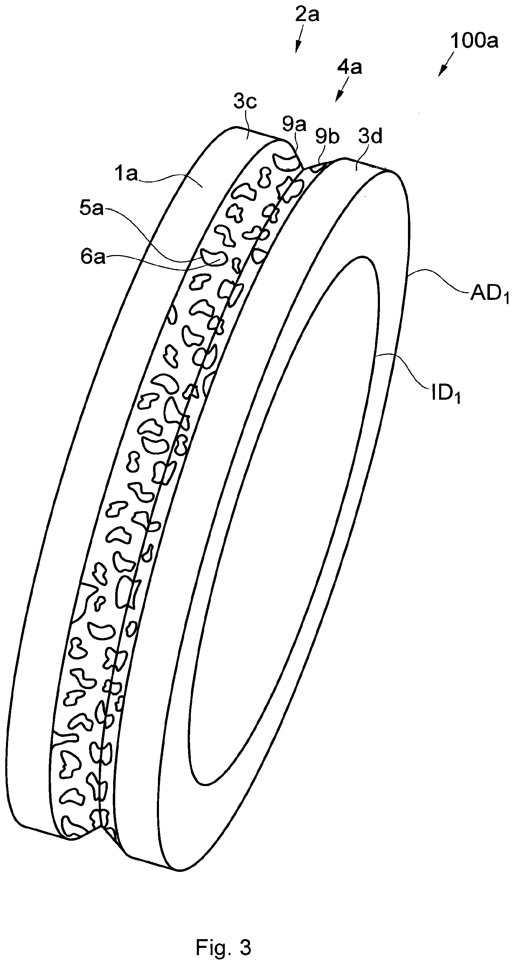

Die Fig. 3 zeigt schematisch und in perspektivischer Darstellung eine zweite Ausgestaltungsvariante eines weiterhin erfindungsgemäßen Seilrollen-Einlageringes 100a, der wie gehabt einen Ringkorpus oder Trägermaterial 1a mit einem Außendurchmesser AD₁ und einem Innendurchmesser ID₁, sowie eine Mantelfläche 2a mit Randschultern 3c und 3d umfasst. Eine Laufrille 4a ist dieses Mal im Querschnitt allerdings V-förmig ausgeformt und bildet Flanken 9a und 9b, in denen Verbundelemente 5a mit einer jeweiligen Kontaktoberfläche 6a annähernd bündig zu der Oberfläche der Flanken 9a und 9b angeordnet sind.

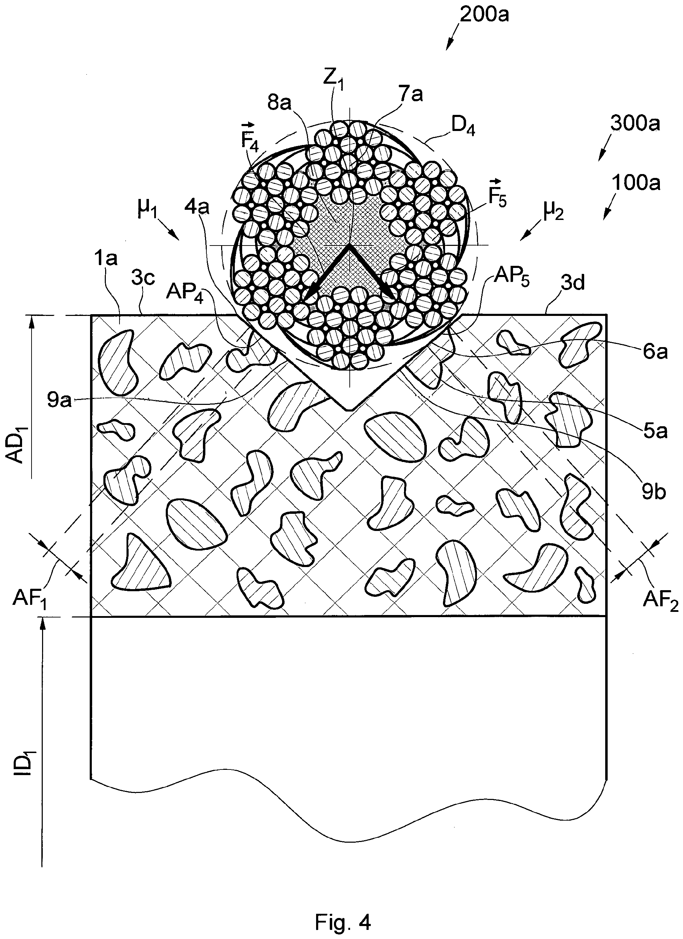

In der Fig. 4 ist die Ausgestaltungsvariante einer Seilrolle 300a bzw. eines erfindungsgemäßen Seilrollen-Einlageringes 100a aus der Fig. 3 in Schnittansicht in Zusammenwirkung mit einem Seil 200a gezeigt. Durch die im Querschnitt keil- oder V-förmige Laufrille 4a gibt es lediglich einen Auflagepunkt AP₄ bzw. eine Auflagefläche AF₁ auf der linken Flanke 9a und einen Auflagepunkt AP₅ bzw. eine Auflagefläche AF₂ auf der rechten Flanke 9b. Erneut nur schematisch angedeutet, wirken in diesem Fall aus einem Zentrum Z₁ zwei annähernd identische Kraftvektoren F₄ in Richtung des Auflagepunktes AP₄ und F₅ in Richtung des Auflagepunktes AP₅. Man kann somit sagen, dass einerseits im Unterschied zu der im Querschnitt annähernd halbrund-konkaven Laufrille 4 in der Fig. 2, die Traglast nur auf die zwei Auflagepunkte AP₄ und AP₅ anstatt auf drei Auflagepunkte konzentriert ist und somit andere bzw. bessere Voraussetzungen für die Seilreibung auf dem Seilrollen-Einlagering 100a schafft. Andererseits tritt bei dieser Anordnung so gut wie kein Schlupf auf.

Ansonsten weist der Seilrollen-Einlagering 100a analog zu der Ausgestaltungsvariante eines erfindungsgemäßen Seilrollen-Einlageringes 100 aus der Fig. 2 einen Ringkorpus bzw. ein Trägermaterial 1a mit einem Außendurchmesser AD₁ und einem Innendurchmesser ID₁ mit Randschultern 3c und 3d auf. In das Trägermaterial 1a sind Verbundelemente 5a beliebig angeordnet. Diejenigen davon, die an die Flanken 9a und 9b angrenzen, formen Kontaktoberflächen 6a aus. Das Seil 200a umfasst einen Seilkern 8a und Litzen 7a, die eine gedachte kreisförmige Bewegung auf einem Durchmesser D₄ beschreiben. Die Litzen 7a sind üblicherweise aus Stahl, das Trägermaterial 1a kann Gummi sein und die Verbundelemente können beispielsweise aus Keramik sein und somit ergibt sich bei dem erfindungsgemäßen Seilrollen-Einlagering 100a eine momentane Seilreibung annähernd und im Wesentlichen aus der Summe einer ersten Haftreibung µ₁ in dem Auflagepunkt AP₄ und einer zweiten Haftreibung µ₂ in dem Auflagepunkt AP₅. Und die Haftreibungswerte µ₁ und µ₂ wiederum ergeben sich annähernd und im Wesentlichen aus dem Kontakt des Stahles der Litzen 7a mit der jeweiligen, momentanen Kontaktfläche gebildet aus Trägermaterial 1a plus Keramik-Kontaktoberflächen 6a. Diese Ausführungen sind nur approximativ, weil eine Reibung, die beispielsweise nicht berücksichtigt ist, der Seildrall ist.

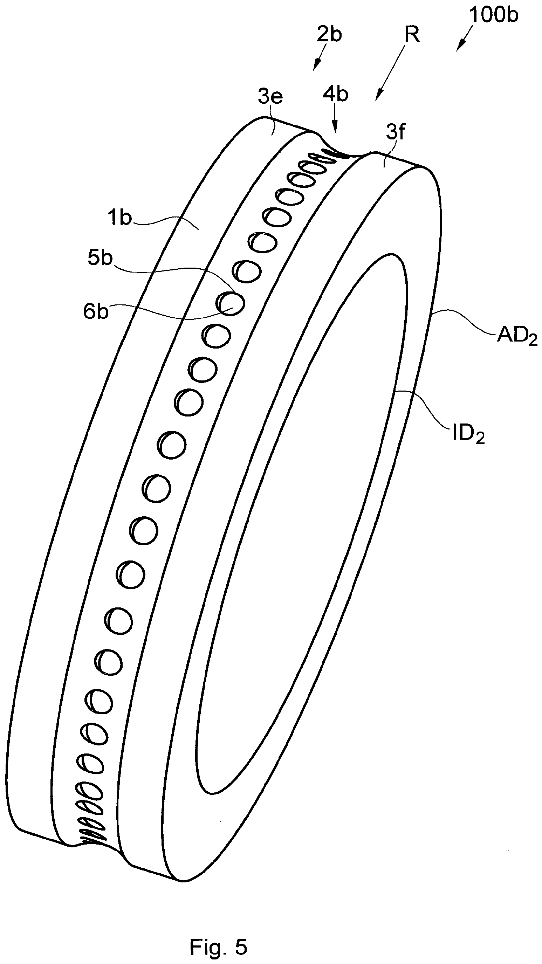

Die Fig. 5 zeigt eine dritte Ausgestaltungsvariante eines erfindungsgemäßen Seilrollen-Einlageringes 100b mit einem Ringkorpus bzw. einem Trägermaterial 1b mit einem Außendurchmesser AD₂ und einem Innendurchmesser ID₂, sowie einer Mantelfläche 2b mit einer linken Randschulter 3e und einer rechten 3f. Eine im Querschnitt annähernd halbrund-konkave Laufrille 4b weist annähernd mittig eine Reihe R von sich regelmäßig wiederholend angeordneten Verbundelementen 5b auf, mit jeweils einer Kontaktoberfläche 6b.

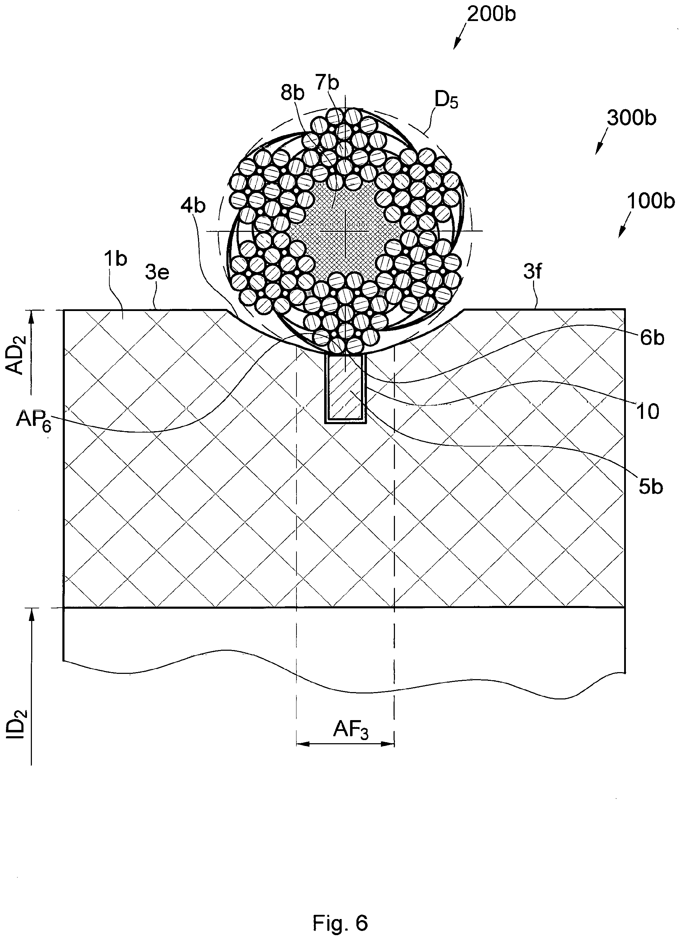

In der Fig. 6 ist in einer Schnittansicht gezeigt, wie die Ausgestaltungsvariante des erfindungsgemäßen Seilrollen-Einlageringes 100b aus der Fig. 5 mit einem Seil 200b zusammenwirkt. Das Letztere, übrigens erneut mit Litzen 7b um einen Seilkern 8b herum dargestellt, läuft in einer gedachten kreisförmigen Bewegung mit einem Durchmesser D₅ auf einer Seilrolle 300b oder der Laufrille 4b des Seilrollen-Einlageringes 100b in einem mittigen Bereich einer Auflagefläche AF₃ mit einem mittigen Auflagepunkt AP₆. Ein Teil dieser Auflagefläche AF₃ wird aber von einer Kontaktoberfläche 6b des Verbundelementes 5b gebildet. Das Verbundelement 5b wiederum ist bei dieser Ausgestaltungsvariante beispielsweise ein regelmäßiger Zylinder, der voll sein kann und weiterhin beispielsweise so in eine Bohrung 10 eingeklebt oder einvulkanisiert sein kann, dass er sie fast komplett ausfüllt, nämlich bis auf zwei obere Ecken, die einerseits vom Radius der im Querschnitt annähernd halbrund-konkaven Laufrille 4b herrühren und andererseits von der Tatsache, dass die Kontaktoberfläche 6b eine gerade Oberfläche eines regelmäßigen Zylinders ist, den das Verbundelement 5b hier darstellt. Es wäre allerdings auch möglich, an der Kontaktoberfläche 6b den gleichen Radius vorzusehen, insbesondere durch Herausschleifen der Laufrille 4b.

Weitere, in dieser Fig. 6 angezeigte, aber jetzt in deren Beschreibung nicht mehr erwähnte Bezugszeichen sind aus der Fig. 5 bereits bekannt.

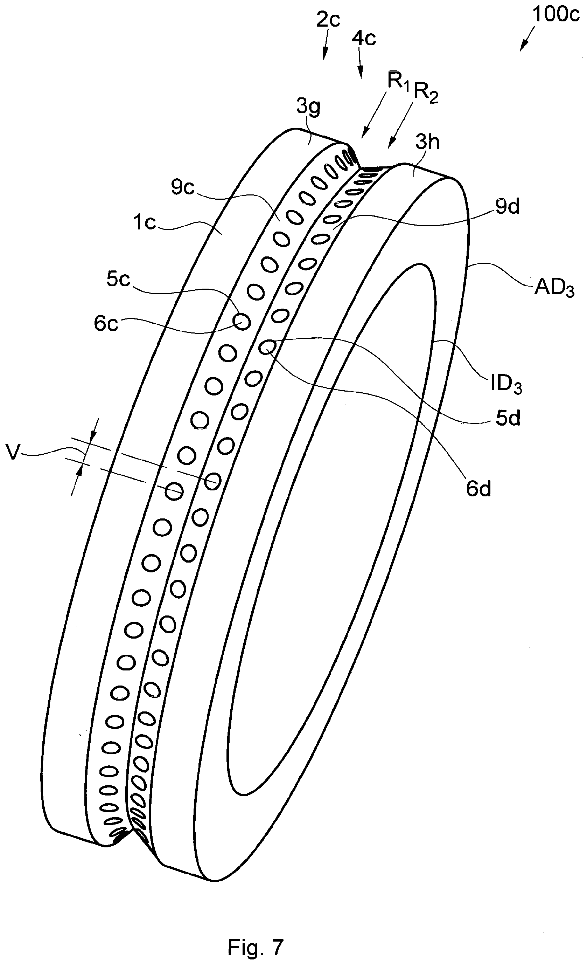

Die Fig. 7 zeigt eine vierte Ausgestaltungsvariante eines erfindungsgemäßen Seilrollen-Einlageringes 100c, der die bisher bekannten Merkmale mit fortgeführten Indizes aufweist. Eine Laufrille 4c ist dieses Mal allerdings im Querschnitt keil- oder V-förmig ausgestaltet, mit zwei Flanken 9c und 9d, an denen je eine Reihe R₁ und R₂ von sich regelmäßig wiederholend angeordneten Verbundelementen 5c und 5d vorgesehen sind, jeweils mit Kontaktoberflächen 6c und 6d. Die einzelnen Verbundelemente 5c und 5d in den Reihen R₁ und R₂ sind optional mit einem Versatz V beabstandet angeordnet. Ansonsten weist ein Ringkorpus 1c einen Außendurchmesser AD₃ und einen Innendurchmesser ID₃, sowie eine Mantelfläche 2c auf, in der zwei Randschultern 3g und 3h die Laufrille 4c flankieren.

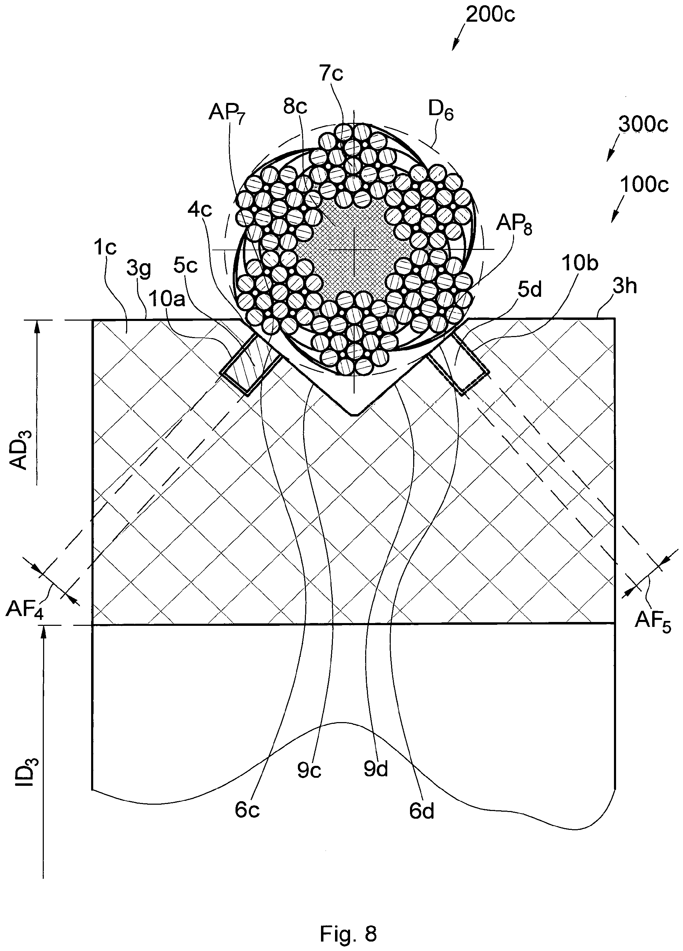

In der Fig. 8 ist die vierte Ausgestaltungsvariante einer erfindungsgemäßen Seilrolle 300c bzw. eines erfindungsgemäßen Seilrollen-Einlageringes 100c aus der Fig. 7 in einer Schnittansicht gezeigt, in Zusammenwirkung mit einem Seil 200c, erneut mit einem Seilkern 8c und mit Litzen 7c auf einem gedachten Durchmesser D₆ dargestellt. Die Verbundelemente 5c und 5d sind in Bohrungen 10a bzw. 10b angeordnet, Das Seil 200c liegt in Auflagepunkten AP₇ und AP₈ auf den Kontaktoberflächen 6c und 6d der Verbundelemente 5c und 5d auf. Diese Kontaktoberflächen 6c und 6d entsprechen bei dieser Ausgestaltungsvariante einer erfindungsgemäßen Seilrolle 300c bzw. eines erfindungsgemäßen Seilrollen-Einlageringes 100c annähernd einer jeweiligen Auflagefläche AF₄ bzw. AF₅.

Weitere, in dieser Fig. 8 angezeigte, aber jetzt in deren Beschreibung nicht mehr erwähnte Bezugszeichen sind aus der Fig. 7 bereits bekannt.

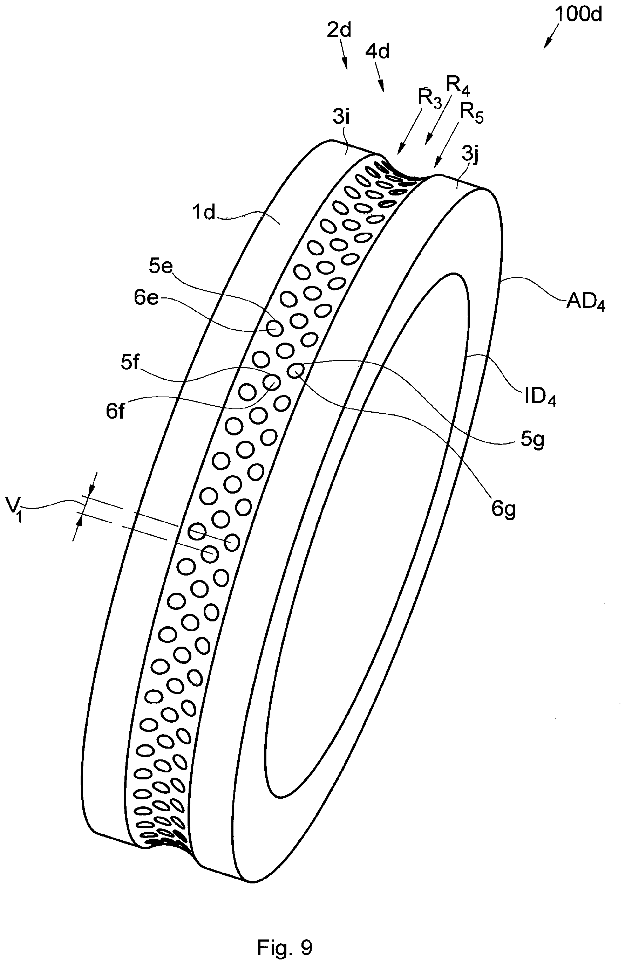

Die Fig. 9 zeigt eine fünfte Ausgestaltungsvariante eines weiterhin erfindungsgemäßen Seilrollen-Einlageringes 100d, die so wie die Ausgestaltungsvariante eines erfindungsgemäßen Seilrollen-Einlageringes 100b aus der Fig. 5 zwar ebenfalls eine im Querschnitt annähernd halbrund-konkave Laufrille 4d ausformt, in dieser sind dieses Mal jedoch drei Reihen R₃-R₅ von Verbundelementen 5e-5g angeordnet, mit jeweiligen Kontaktoberflächen 6e-6g. Die mittlere Reihe R₄ ist beispielhaft mit einem Versatz V₁ zu den Reihen R₃ und R₅ angeordnet. Ein Ringkorpus 1d hat einen Außendurchmesser AD₄ und einen Innendurchmesser ID₄. Des Weiteren formt der Ringkorpus 1d an einer Mantelfläche 2d zwei die Laufrille 4d begrenzende Randschultern 3i und 3j aus.

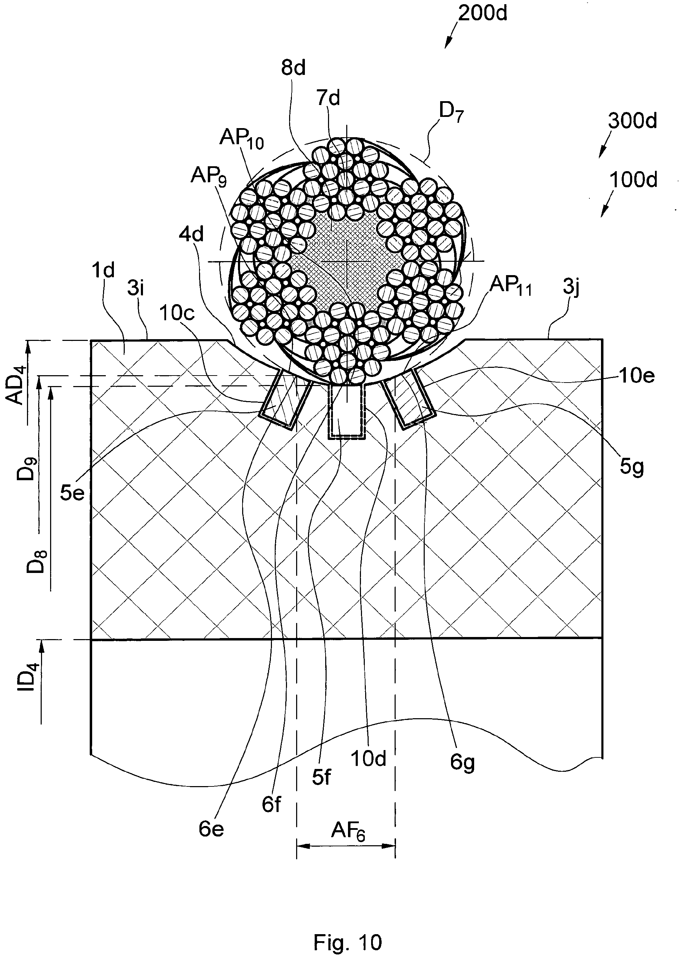

In der Fig. 10 ist in einer Schnittansicht gezeigt, wie ein Seil 200d, das beispielhaft erneut mit einem Seilkern 8d und mit Litzen 7d auf einem gedachten Durchmesser D₇ dargestellt ist, auf einer Seilrolle 300d bzw. dem Seilrollen-Einlagering 100d aufliegt, nämlich in beispielhaften Auflagepunkten AP₉-AP₁₁ auf einer Auflagefläche AF₆ der im Querschnitt annähernd halbrund-konkaven Laufrille 4d. Diese drei Auflagepunkte AP₉-AP₁₁ entsprechen den Kontaktoberflächen 6e-6g von den Verbundelementen 5e-5g, die jeweils in Bohrungen 10c-10e in dem Trägermaterial 1d angeordnet sind.

Der mittlere Auflagepunkt AP₁₀ liegt auf einem Durchmesser D₈, der kleiner als ein Durchmesser D₉ ist, auf dem die beiden äußeren Auflagepunkte AP₉ und AP₁₁ liegen. Der in Fig. 2 dargestellte Schlupf S, der bei den äußeren Auflagepunkten AP₉ und AP₁₁ am größten wäre, ist bei dieser Ausgestaltungsvariante eines erfindungsgemäßen Seilrollen-Einlageringes 100d reduziert, weil diese Auflagepunkte AP₉ und AP₁₁ auf die reibungsreduzierten Kontaktoberflächen 6e bzw. 6g auftreffen.

Weitere, in dieser Fig. 10 angezeigte, aber jetzt in deren Beschreibung nicht mehr erwähnte Bezugszeichen sind aus der Fig. 9 bereits bekannt.

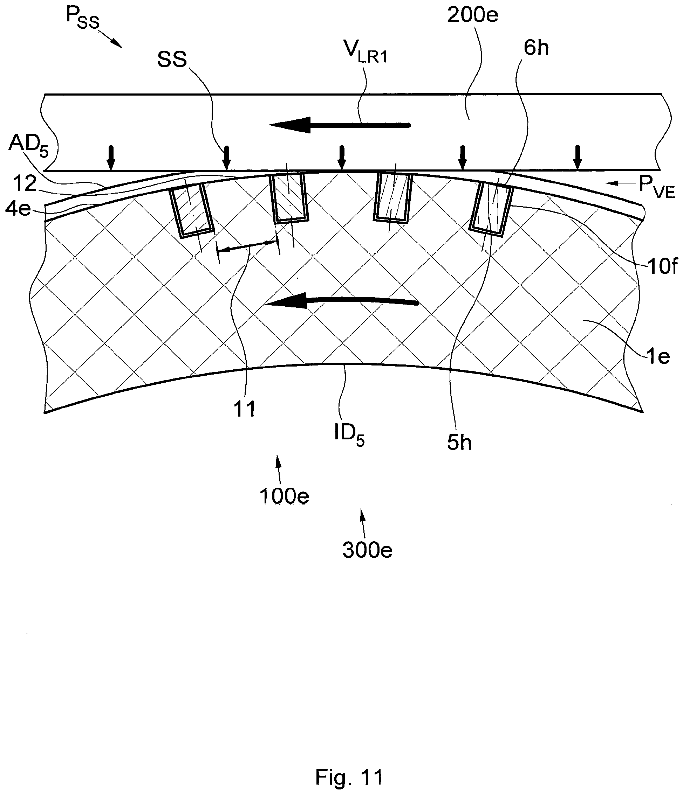

Die Fig. 11 zeigt schematisch in einer Schnittansicht eine weitere, sechste Ausgestaltungsvariante einer erfindungsgemäßen Seilrolle 300e bzw. eines erfindungsgemäßen Seilrollen-Einlageringes 100e, auf der ein Seil 200e mit einer Laufrichtungsgeschwindigkeit V_{LR1} abrollt. Das Seil 200e hat einen Seilschlag SS, der in einer Periodizität P_{SS} auftritt. Erfindungsgemäß sind nun Verbundelemente 5h mit jeweiligen Kontaktoberflächen 6h in Bohrungen 10f eines Trägermaterials 1e des Seilrollen-Einlageringes 100e so voneinander in einem Abstand 11 angeordnet, dass eine Verbundelemente-Periodizität P_{VE} mit der Seilschlag-Periodizität P_{SS} übereinstimmt, vorzugsweise so, dass der Seilschlag SS immer auf einen Verbundelemente-Zwischenraum 12 auftrifft. Diese beschriebene Synchronität wäre dem Komfort geschuldet, sofern der Seilschlag SS dann immer auf möglichst weich dämpfende Stellen am Seilrollen-Umfang auftrifft. Umgekehrt, sofern die Seilschläge SS Reibungsspitzen darstellen, können zugunsten einer Reibungsreduzierung auch gerade diese Seilschläge SS mit den Verbundelementen 5h synchron sein.

Des Weiteren ist ersichtlich, dass der Ringkorpus 1e einen Innendurchmesser ID₅ und einen Außendurchmesser AD₅ aufweist, sowie eine Laufrille 4e, deren geschnittene, rückwärtige Hälfte ohne Schraffur gezeigt ist. Das beschriebene Merkmal der Synchronität ist mit allen anderen offenbarten Seilrollen-Ausgestaltungsvarianten kombinierbar.

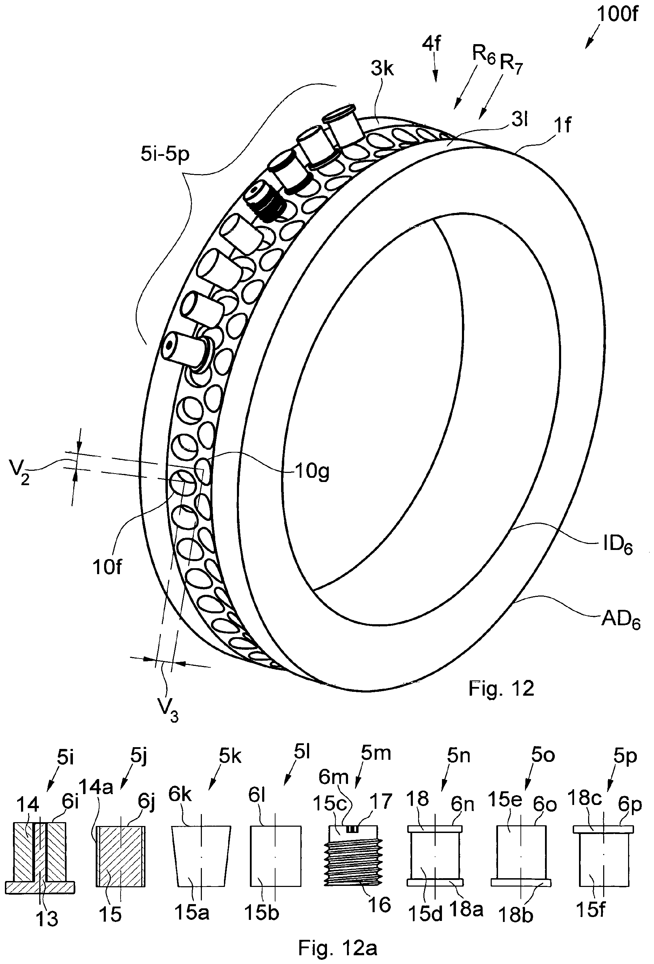

In der Fig. 12 ist eine weitere, siebte Ausgestaltungsvariante eines erfindungsgemäßen Seilrollen-Einlageringes 100f mit einem Ringkorpus 1f gezeigt, der sich nebst den bereits bekannten Merkmalen durch eine im Querschnitt annähernd halbrund-konkave Laufrille 4f auszeichnet, in der zwei Reihen R₆ und R₇ von Verbundelementen anordenbar sind. Die Verbundelemente 5i-5p sind nur lose im Raum angedeutet und können in ein und demselben Seilrollen-Einlagering 100f unterschiedliche Formen aufweisen.

Ansonsten formt der Ringkorpus 1f zwei Randschultern 3k und 3l aus und hat einen Außendurchmesser AD₆ und einen Innendurchmesser ID₆.

Die beiden Reihen R₆ und R₇ sind zueinander vorzugsweise so angeordnet, dass nicht nur ein radialer Versatz V₂ zwischen einzelnen Verbundelemente-Bohrungen 10f und 10g besteht, sondern auch axial ein negativer Versatz V₃, d.h., die beiden Verbundelemente-Reihen R₆ und R₇ greifen ineinander.

Die Fig. 12a zeigt die in der Fig. 12 angedeuteten, unterschiedlichen und beispielhaften Formen von Verbundelementen 5i-5p etwas genauer. Das Verbundelement 5i ist zweiteilig und hat einen Stempel 13, der in einer Hülse 14 gelagert ist. Das Verbundelement 5j ist ein Zylinder 15, der in einer dünnen Hülse 14a steckt. Das Verbundelement 5k ist ein konischer Zylinder 15a und derjenige des Verbundelementes 51 ein regelmäßiger 15b. Das Verbundelement 5m ist erneut ein regelmäßiger Zylinder 15c, an dessen Mantelfläche ein Gewinde 16 und an dessen Oberfläche eine Schlüsselaufnahme 17 angeordnet sind. Die Verbundelemente 5n-5p haben ebenfalls regelmäßige Zylinder 15d-15f, mal mit einem oberen Kragen 18 und einem unteren 18a, mal nur mit einem unteren 18b und mal nur mit einem oberen 18c. Alle Verbundelemente 5i-5p formen jeweils eine Kontaktoberfläche 6i-6p aus.

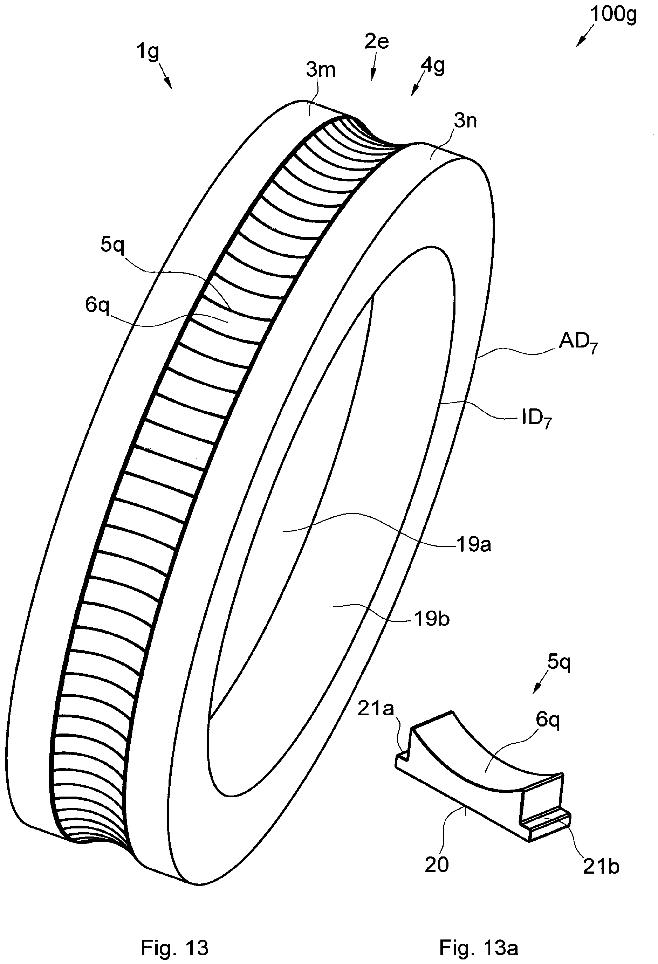

In der Fig. 13 ist eine weitere, achte Ausgestaltungsvariante eines weiterhin erfindungsgemäßen Seilrollen-Einlageringes 100g gezeigt, der sich zuerst einmal dadurch auszeichnet, dass ein Ringkorpus 1g zwei axiale Ringkorpus-Hälften 19a und 19b umfasst und diese wiederum eine vollumfängliche Aneinanderreihung von stegförmigen Verbundelementen 5q fassen. Eine Laufrille 4g ist hierbei annähernd vollflächig durch konkave Kontaktoberflächen 6q der Verbundelemente 5q gebildet. Die restlichen Merkmale bzw. Bauteile des Seilrollen-Einlageringes 100g sind bereits bekannt und werden demzufolge nicht mehr erwähnt, sondern nur mit fortgeführten Indizes dargestellt.

Die Fig. 13a zeigt über die konkave Kontaktoberfläche 6q hinaus, dass das Verbundelement 5q an einer Grund- oder Stützfläche 20 zwei Haltefüße 21a und 21b ausformt.

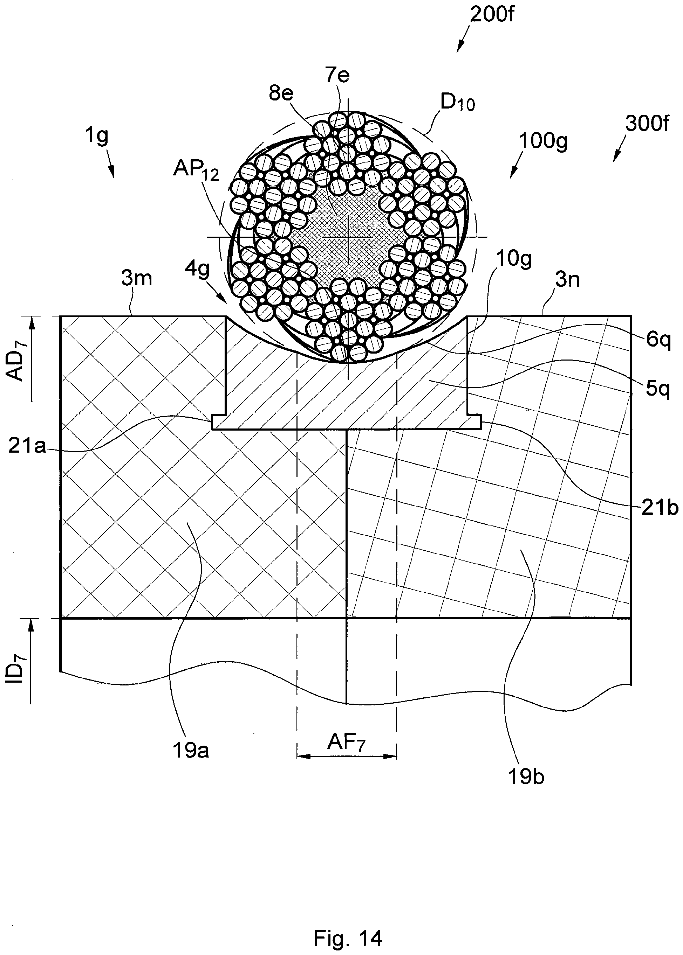

In der Fig. 14 ist in einer Schnittansicht gezeigt, wie ein Drahtseil 200f, beispielhaft erneut mit einem Seilkern 8e und mit Litzen 7e auf einem gedachten Durchmesser D₁₀ dargestellt, in der Laufrille 4g eines Seilrollen-Einlageringes 100g bzw. einer Seilrolle 300f aufliegt, nämlich auf einer Auflagefläche AF₇ mit einem Auflagepunkt AP₁₂. Eine Ausnehmung 10g, gebildet von den beiden Ringkorpus-Hälften 19a und 19b, nimmt das Verbundelement 5q formschlüssig auf. Die restlichen Merkmale bzw. Bauteile sind bereits aus den vorangegangenen Figuren 13 und 13a bekannt und werden somit ohne weitere Beschreibung lediglich angezeigt.

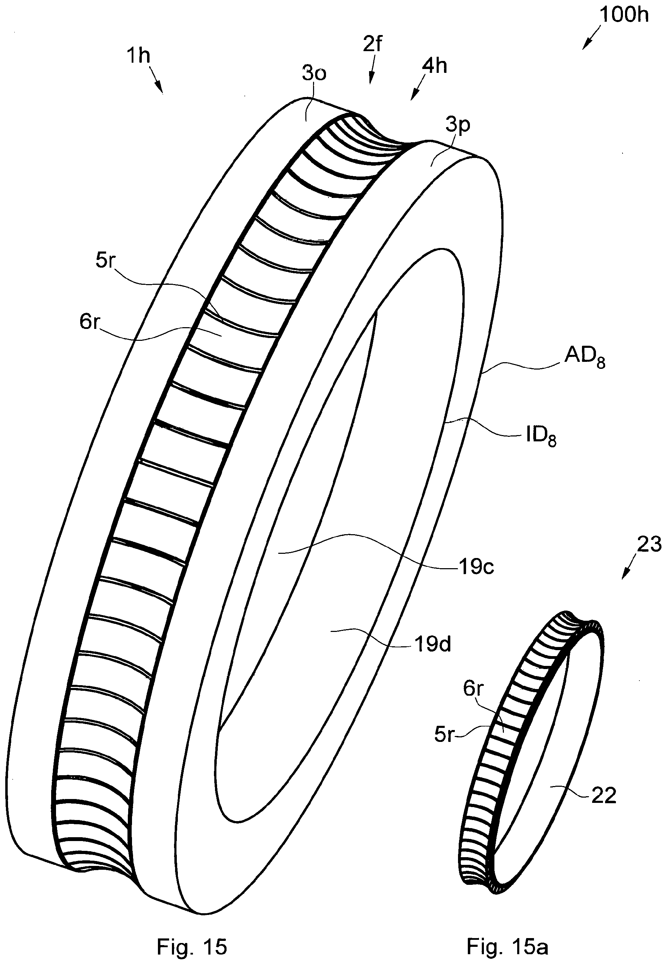

Die Fig. 15 zeigt eine weitere, neunte Ausgestaltungsvariante eines weiterhin erfindungsgemäßen Seilrollen-Einlageringes 100h, bei dem erneut ein Ringkorpus 1h aus zwei Ringkorpus-Hälften 19c und 19d gebildet ist, die wiederum Verbundelemente 5r fassen. Eine Laufrille 4h ist durch die Aneinanderreihung von konkaven Kontaktoberflächen 6r ausgeformt. Der Ringkorpus 1h hat einen Außendurchmesser AD₈, einen Innendurchmesser ID₈ und eine Mantelfläche 2f, an der Randschultern 3o und 3p die Laufrille 4h begrenzen.

In der Fig. 15a ist ersichtlich, dass die Verbundelemente 5r mit einer ringförmigen Innenfläche 22 zu einem Segmente- oder Verbundelemente-Ring 23 ausgebildet sind.

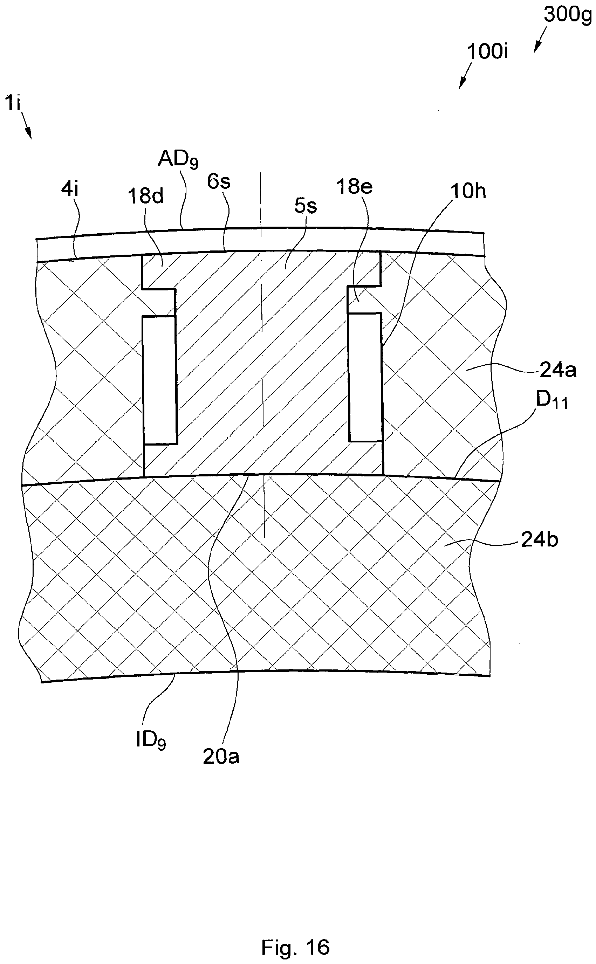

Die Fig. 16 deutet eine weitere, zehnte Ausgestaltungsvariante einer weiterhin erfindungsgemäßen Seilrolle 300g bzw. eines weiterhin erfindungsgemäßen Seilrollen-Einlageringes 100i an, bei dem ein Ringkorpus 1i durch zwei aneinander vulkanisierte oder aneinander geklebte radiale Einzelringe 24a und 24b gebildet ist. Des Weiteren bildet der Ringkorpus 1i einen Innendurchmesser ID₉, einen Außendurchmesser AD₉ und eine Laufrille 4i aus.

Der äußere radiale Einzelring 24a kann härter als der innere 24b sein und hält in einer Ausnehmung bzw. Bohrung 10h ein Verbundelement 5s, das eine Kontaktoberfläche 6s und eine Grund- oder Stützfläche 20a aufweist. Die Letztere stützt sich auf einem Durchmesser D₁₁ des inneren, optional weicheren Einzelringes 24b ab. Dadurch ist ein verschleißarmer, weil härterer äußerer Einzelring 24a gleichzeitig guter Sitz für das Verbundelement 5s, das wiederum gut gedämpft ist.

Die Dämpfung des Verbundelementes 5s kann optional noch zusätzlich verbessert sein, indem es kein gerader Zylinder ist, der mit seiner ganzen Mantelfläche an den Innenwänden der Ausnehmung bzw. Bohrung 10h angeordnet ist, sondern nur ein kreisförmiger Kragen 18d des Verbundelementes 5s sich formschlüssig auf einem kreisförmigen Kragen 18e der Ausnehmung bzw. Bohrung 10h abstützt.

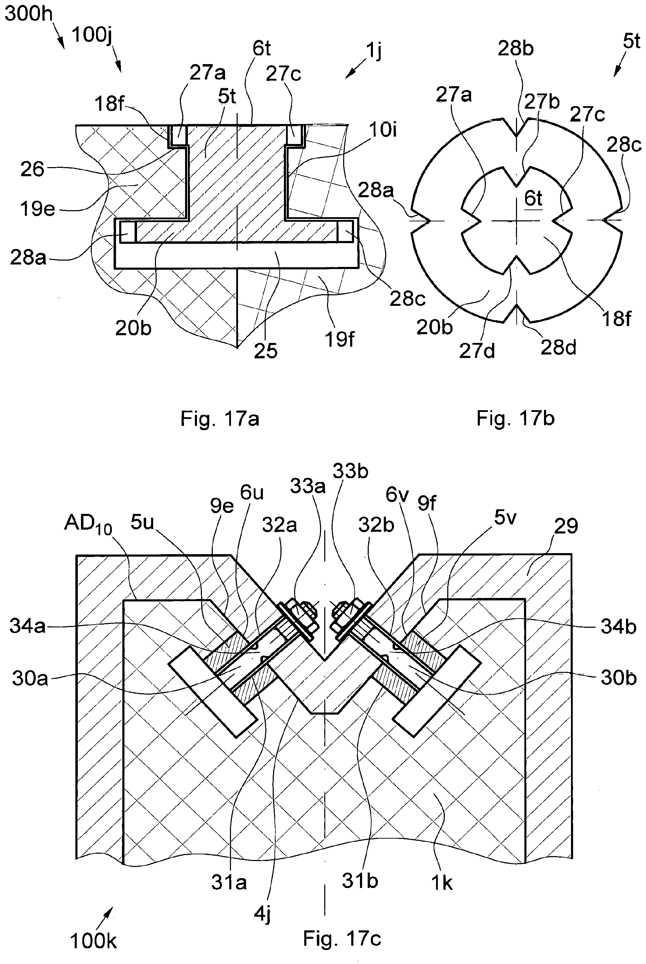

In der Fig. 17a ist in einer schematischen Schnittdarstellung eine weitere, elfte Ausgestaltungsvariante einer weiterhin erfindungsgemäßen Seilrolle 300h bzw. eines weiterhin erfindungsgemäßen Seilrollen-Einlageringes 100j angedeutet, bei dem erneut ein Verbundelement 5t mit einer Kontaktoberfläche 6t von zwei axialen Ringkorpus-Hälften 19e und 19f gefasst ist, die wiederum zusammen einen Ringkorpus 1j bilden. Das Besondere an dieser Ausgestaltungsvariante ist, dass eine Bohrung bzw. Ausnehmung 10i durch das Verbundelement 5t nicht komplett formschlüssig ausgefüllt ist, sondern ein luftgefüllter Hohlraum 25 übrig bleibt. Das Verbundelement 5t weist ansonsten einen annähernd kreisförmigen Kragen 18f auf, mit dem es auf einer kreisförmigen Schulter 26 der Bohrung bzw. Ausnehmung 10i abgestützt ist, sowie eine annähernd kreisförmige Grund- oder Stützfläche 20b, mit der es quasi auf dem Luftkissen des Hohlraumes 25 abgestützt ist. Der Dämpfungsgrad des Verbundelementes 5t in dem Ringkorpus 1j hängt hierbei einerseits von der Härte der kreisförmigen Schulter 26 ab, aber eben auch von der Größe oder vielmehr der Luftdurchlässigkeit von Kanälen 27a-27d in dem annähernd kreisförmigen Kragen 18f und 28a-28d in der annähernd kreisförmigen Grund- oder Stützfläche 20b. Diese Kanäle 27a-27d und 28a-28d sind in der Fig. 17b in einer Draufsicht auf das Verbundelement 5t gut erkennbar.

Die Fig. 17c deutet ein weiterhin erfindungsgemäßes Herstellungsverfahren eines erfindungsgemäßen Seilrollen-Einlageringes 100k mit einem Außendurchmesser AD₁₀ an, der, wenn fertig, annähernd dem Seilrollen-Einlagering aus der Fig. 7 entspricht. Eine Laufrille 4j ist nämlich ebenfalls im Querschnitt V-förmig und Verbundelemente 5u und 5v werden nach dem Entfernen einer Guss- bzw. Vulkanisierform 29 in einem Ringkorpus 1k bzw. Flanken 9e und 9f der Laufrille 4j angeordnet sein.

Für die Positionierung der Verbundelemente 5u und 5v beim Gießen bzw. Vulkanisieren des Seilrollen-Einlageringes 100k sind Befestigungsstempel 30a bzw. 30b vorgesehen, die jeweils in eine Befestigungsbohrung 31a bzw. 31b der Verbundelemente 5u bzw. 5v, sowie jeweils in eine Positionier-Bohrung 32a bzw. 32b der Guss- bzw. Vulkanisierform 29 eingesetzt sind. Die Befestigungsstempel 30a und 30b werden jeweils mit einer Mutter oder Sicherung 33a und 33b gesichert. Nach erfolgtem Gießen bzw. Vulkanisieren wird die Guss- bzw. Vulkanisierform 29 entfernt und hierbei werden die Befestigungsstempel 30a und 30b jeweils an einer Sollbruchstelle 34a und 34b gebrochen. Auf diese Weise resultiert die Laufrille 4j mit den Flanken 9e und 9f, jeweils mit darin oberflächig angeordneten Kontaktoberflächen 6u und 6v der jeweiligen Verbundelemente 5u und 5v.

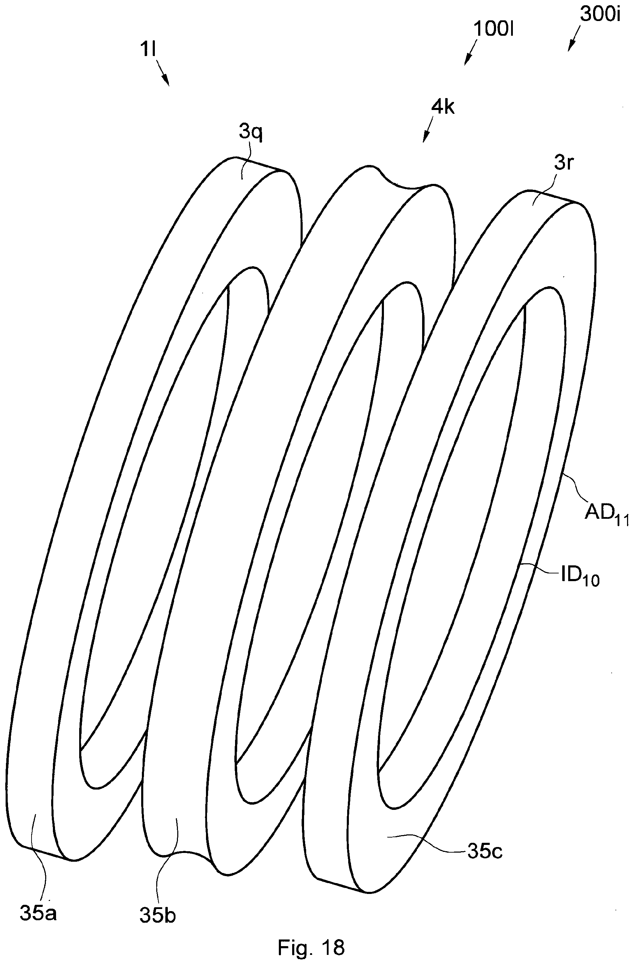

In der Fig. 18 ist eine weitere, zwölfte Ausgestaltungsvariante einer weiterhin erfindungsgemäßen Seilrolle 300i bzw. eines weiterhin erfindungsgemäßen Seilrollen-Einlageringes 100l angedeutet, die bzw. der mindestens drei axiale Einzelringe 35a-35c umfasst. Diese axialen Einzelringe 35a-35c können zusammengeklebt oder - vulkanisiert oder auch 3D-gedruckt werden und bilden dann einen Ringkorpus 11 mit einem Außendurchmesser AD₁₁ und einem Innendurchmesser ID₁₀. Die äußeren axialen Einzelringe 35a und 35c formen Randschultern 3q und 3r aus und der mittlere axiale Einzelring wiederum formt eine Laufrille 4k aus, die im Querschnitt annähernd halbrund-konkav oder auch V-förmig sein kann.

Die axialen Einzelringe 35a-35c können aus unterschiedlichem Material sein oder/und unterschiedliche Härten aufweisen. So empfiehlt es sich vielleicht, im Sinne der erfindungsgemäßen Reibungsreduzierung bei gleichzeitiger Dämpfungsoptimierung oder -beibehaltung, für die äußeren axialen Einzelringe 35a und 35c ein weiches Material auszuwählen und für den mittleren axialen Einzelring 35b ein härteres, reibungsresistenteres. All dies kann mit oder ohne darin angeordneten Verbundelementen erfolgen und wenn mit, so empfiehlt es sich weiterhin, nur den mittleren axialen Einzelring 35b damit auszustatten.

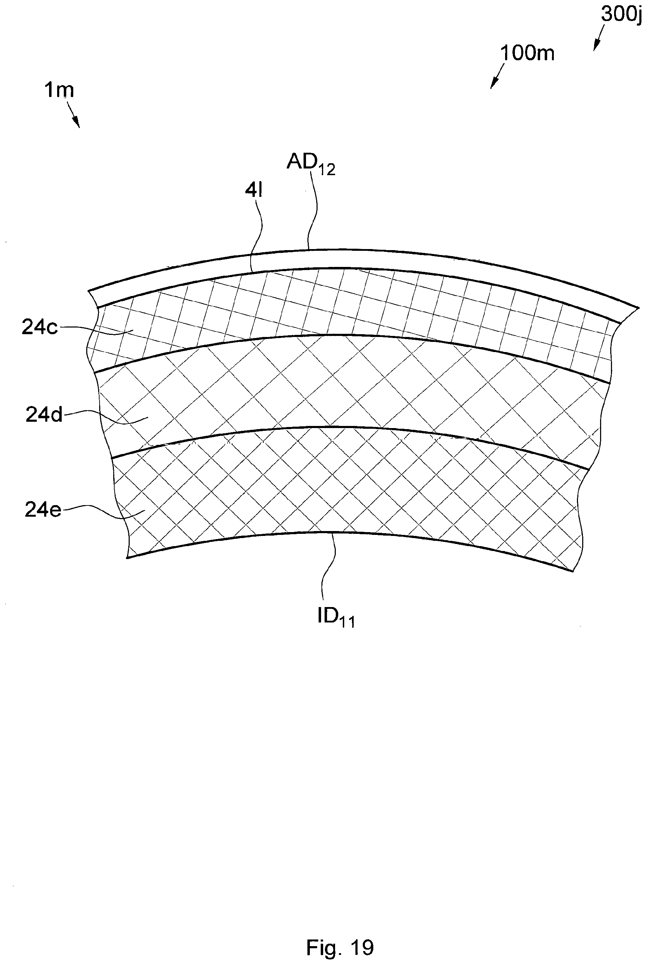

Die Fig. 19 deutet eine weitere, dreizehnte mögliche Ausgestaltungsvariante einer weiterhin erfindungsgemäßen Seilrolle 300j bzw. eines weiterhin erfindungsgemäßen Seilrollen-Einlageringes 100m an, der im Wesentlichen mindestens drei radiale Einzelringe 24c-24e umfasst. Auch diese radialen Einzelringe 24c-24e können zusammengeklebt oder -vulkanisiert oder 3D-gedruckt sein und bilden dann einen Ringkorpus 1m mit einem Außendurchmesser AD₁₂ und einem Innendurchmesser ID₁₁. Der äußere radiale Einzelring 24c formt eine Laufrille 41 aus.

Es bietet sich erneut an, im Sinne der erfindungsgemäßen Reibungsreduzierung bei gleichzeitiger Dämpfungsoptimierung oder -beibehaltung, für den äußeren radialen Einzelring 24c ein härteres, reibungsreduziertes Material auszuwählen, für den mittleren radialen Einzelring 24d ein weicheres, gut dämpfendes, sei es als anderes Material oder als gleiches, aber nur in einer weicheren Ausführungsform, und für den inneren radialen Einzelring 24e wieder ein härteres oder sogar noch einmal härteres als für den äußeren radialen Einzelring, zur Gewährleistung eines guten Sitzes der Seilrolle auf dem Rollenkörper. Auch dieses dritte Material kann grundsätzlich das gleiche Material einfach in einer anderen Härte oder ein ganz anderes sein. Entscheidend ist, dass sich die Verbindung zwischen den radialen Einzelringen 24c-24e auch unter hoher mechanischer und thermischer Belastung nicht löst. All dies kann mit oder ohne in den radialen Einzelringen 24c-24e angeordneten Verbundelementen wie in all den vorangegangenen Figuren beschrieben erfolgen und wenn mit, so empfiehlt es sich weiterhin, sie nur in dem äußeren radialen Einzelring 24c vorzusehen.

Eine weitere mögliche Ausgestaltungsvariante einer Seilrolle bzw. eines Seilrollen-Einlageringes kombiniert von der Materialart und -härte her unterschiedliche axiale Einzelringe mit radialen Einzelringen, die von der Materialart und -härte her unterschiedlich sind.

### Bezugszeichenliste

- 1, 1a-1m: - Ringkorpus, Trägermaterial
- 2, 2a-2f: - Mantelfläche
- 3a-3r: - Randschulter
- 4, 4a-4l: - Laufrille
- 5, 5a-5v: - Verbundelement, -werkstoff, Verschleißeinsatz
- 6, 6a-6v: - Kontaktoberfläche von 5
- 7, 7a-7e: - Litze, Litzen-Außenmaterial
- 8, 8a-8e: - Seilkern
- 9a-9f: - Flanke von 4
- 10, 10a-10i: - Bohrung, Ausnehmung
- 11: - Abstand zwischen 5h
- 12: - Zwischenraum von 5h
- 13: - Stempel
- 14, 14a: - Hülse
- 15, 15a-15f: - Zylinder
- 16: - Gewinde
- 17: - Schlüsselaufnahme
- 18, 18a-18f: - Kragen
- 19a-19f: - Ringkorpus-Hälfte
- 20, 20a, 20b: - Grund- oder Stützfläche
- 21a, 21b: - Haltefuß
- 22: - ringförmige Innenfläche
- 23: - Segmente-Kranz oder Verbundelemente-Ring
- 24a-24e: - radialer Einzelring
- 25: - Hohlraum
- 26: - Schulter
- 27a-27d: - Kanal oder Einkerbung in 18f
- 28a-28d: - Kanal oder Einkerbung in 20b
- 29: - Guss- bzw. Vulkanisierform
- 30a, 30b: - Befestigungsstempel
- 31a, 31b: - Befestigungsbohrung in 5u und 5v
- 32a, 32b: - Positionier-Bohrung in 29
- 33a, 33b: - Mutter, Sicherung
- 34a, 34b: - Sollbruchstelle
- 35a-35c: - axialer Einzelring
- 100, 100a-100m: - Seilrollen-Einlagering, Futter, Ausfütterung
- 200, 200a-200f: - Seil, Drahtseil
- 300, 300a-300j: - Seilrolle

- AD, AD₁-AD₁₂: - Außendurchmesser
- AF, AF₁-AF₇: - Auflagefläche
- AP₁-AP₁₂: - Auflagepunkt
- D₁-D₁₁: - Durchmesser
- F₁-F₅: - Kraftvektor
- ID, ID₁-ID₁₁: - Innendurchmesser
- µ₁, µ₂: - Haftreibung
- P_{SS}: - Periodizität Seilschlag
- P_{VE}: - Periodizität Verbundelemente
- R, R₁-R₇: - Reihe von 5
- S: - Schlupf
- SS: - Seilschlag
- V, V₁-V₃: - Versatz
- V_{LR}-V_{LR1}: - Laufrichtungsgeschwindigkeit von 200
- Z, Z₁: - Zentrum

## Patentansprüche

1. Seilrollen-Einlagering (100, 100a-100m) für die Einlage in eine Seilrolle einer Seilbahnanlage mit einem Seil (200, 200a-200f) mit mindestens einer Litze (7, 7a-7e) aus einem Litzen-Außenmaterial (7, 7a-7e), wobei der Seilrollen-Einlagering (100, 100a-100m) einen Ringkorpus (1, 1a-1m) mit einem Außendurchmesser (AD, AD₁-AD₁₂) und einer zentrisch in dem Ringkorpus (1, 1a-1m) angeordneten Aufnahme mit einem Innendurchmesser (ID, ID₁-ID₁₁) aufweist und wobei der Ringkorpus (1, 1a-1m) eine Mantelfläche (2, 2a-2f) ausformt, an der zwischen Randschultern (3a-3r) eine Laufrille (4, 4a-4l) für die Aufnahme und die Führung des Seiles (200, 200a-200f) angeordnet ist, **dadurch gekennzeichnet, dass** der Seilrollen-Einlagering (100, 100a-100m) einen Verbundwerkstoff umfasst, mit einer ersten Komponente in Form eines elastischen Trägermaterials (1, 1a-1m) mit einer Shore-Härte A + D in einem Bereich von 20 bis 110, die vorzugsweise annähernd 65 beträgt, und mindestens einer zweiten Komponente in Form von Verbundelementen (5, 5a-5v) mit je einer Kontaktoberfläche (6, 6a-6v) zu dem Seil (200, 200a-200f) und wobei die Verbundelemente (5, 5a, 5v) aus einem festen, unelastischen Werkstoff bestehen, mit einer Mohshärte in einem Bereich von 2,5 bis 10, die vorzugsweise annähernd 8 beträgt, und mit einem Haftungsreibungskoeffizienten (µ₁, µ₂) zu dem Litzen-Außenmaterial (7, 7a-7e) in einem Bereich von 0,02 bis 0,6, der vorzugsweise annähernd 0,2 beträgt.

2. Seilrollen-Einlagering (100a, 100c, 100k) nach Anspruch 1, **dadurch gekennzeichnet, dass** die Laufrille (4a, 4c, 4j) im Querschnitt V-förmig ist und zwei Flanken (9a-9f) ausbildet.

3. Seilrollen-Einlagering (100, 100a-100m) nach einem der vorhergehenden Ansprüche, **dadurch gekennzeichnet, dass** die Kontaktoberflächen (6, 6a-6v) der Verbundelemente (5, 5a-5v) bündig mit der oder tiefer als die Oberfläche der Laufrille (4, 4a-4l) sind.

4. Seilrollen-Einlagering (100, 100a-100m) nach einem der vorhergehenden Ansprüche, **dadurch gekennzeichnet, dass** das Verhältnis zwischen der Summe der Kontaktoberflächen (6, 6a-6v) zu der Oberfläche des Trägermaterials (1, 1a-1m) in der Laufrille (4, 4a-4l) in einem Bereich von 10:90 % bis 100:0 % liegt und vorzugsweise annähernd 50:50 % beträgt.

5. Seilrollen-Einlagering (100b-100h) nach einem der vorhergehenden Ansprüche, **dadurch gekennzeichnet, dass** die Verbundelemente (5b-5r) in der Laufrille (4b-4h) in mindestens einer Reihe (R, R₁-R₇) angeordnet sind.

6. Seilrollen-Einlagering (100, 100a-100m) nach einem der vorhergehenden Ansprüche, **dadurch gekennzeichnet, dass** die Verbundelemente (5, 5a-5v) aus Keramik sind.

7. Seilrollen-Einlagering (100e) nach einem der vorhergehenden Ansprüche, **dadurch gekennzeichnet, dass** eine Periodizität (P_{VE}) der Verbundelemente (5h) mittels eines Zwischenraumes (12) und eines Abstandes (11) zueinander mit einer Periodizität (P_{SS}) eines Seilschlages (SS) des Seiles (200e) synchronisiert ist.

8. Seilrollen-Einlagering (100g) nach einem der vorhergehenden Ansprüche, **dadurch gekennzeichnet, dass** die Verbundelemente (5q) stegförmig ausgeformt sind und mittels der Kontaktoberfläche (6q) die Laufrille (4g) bilden.

9. Seilrollen-Einlagering (100h) nach einem der vorhergehenden Ansprüche, **dadurch gekennzeichnet, dass** die Verbundelemente (5r) mittels einer ringförmigen Innenfläche (22) zu einem Segmente-Kranz (23) verbunden sind.

10. Seilrollen-Einlagering (100, 100a-100m) nach einem der vorhergehenden Ansprüche, **dadurch gekennzeichnet, dass** die Verbundelemente (5, 5a-5v) in einer Bohrung oder Ausnehmung (10, 10a-10i) oder in einer Hülse (14, 14a) formschlüssig angeordnet sind.

11. Seilrollen-Einlagering (100j) nach einem der vorhergehenden Ansprüche, **dadurch gekennzeichnet, dass** die Verbundelemente (5t) so in einer Ausnehmung (10i) angeordnet sind, dass zwischen einer Grund- oder Stützfläche (20b) des Verbundelementes (5t) und dem Trägermaterial (1j) ein Hohlraum (25) ausgebildet ist.

12. Seilrollen-Einlagering (100g, 100h, 100j) nach einem der vorhergehenden Ansprüche, **dadurch gekennzeichnet, dass** der Ringkorpus (1g, 1h, 1j) zwei Ringkorpus-Hälften (19a-19f) umfasst, welche die Verbundelemente (5q, 5r, 5t) fassen.

13. Seilrollen-Einlagering (100i, 100l, 100m) nach einem der vorhergehenden Ansprüche, **dadurch gekennzeichnet, dass** der Ringkorpus (1i, 1l, 1m) mindestens zwei axiale Einzelringe (35a-35c) oder/und mindestens zwei radiale Einzelringe (24a-24e) unterschiedlicher Härte umfasst.

14. Verfahren zur Herstellung eines Seilrollen-Einlageringes (100k) nach einem der vorhergehenden Ansprüche 1-13, **dadurch gekennzeichnet, dass** folgende Verfahrensschritte ausgeführt werden:
a) - Vorbereiten einer Guss- bzw. Vulkanisierform (29) durch Einsetzen von Befestigungsstempeln (30a, 30b) in eine Befestigungsbohrung (31a, 31b) von Verbundelementen (5u, 5v);
b) - Einsetzen und Positionieren der Befestigungsstempel (30a, 30b) zusammen mit den Verbundelementen (5u, 5v) in eine jeweilige Positionier-Bohrung (32a, 32b) der Guss- bzw. Vulkanisierform (29);
c) - Sichern der Befestigungsstempel (30a, 30b) in der Positionier-Bohrung (32a, 32b) mittels einer Sicherung (33a, 33b);
d) - Gießen und Vulkanisieren eines Seilrollen-Einlagering-Rohlings bzw. eines Ringkorpus (1k);
e) - Entfernen der Guss- bzw. Vulkanisierform (29);
f) - Brechen der Befestigungsstempel (30a, 30b) an einer jeweiligen Sollbruchstelle (34a, 34b).

15. Seilrolle mit einem Seilrollen-Einlagering (100, 100a-100m) nach einem der vorhergehenden Ansprüche 1-13.

16. Seilbahnanlage mit mindestens einer Seilrolle nach Anspruch 15.

17. Seilrollen-Einlagering (100l) nach dem Oberbegriff des Anspruchs 1, **dadurch gekennzeichnet, dass** der Ringkorpus (1l) mindestens drei axiale Einzelringe (35a-35c) unterschiedlicher Härte umfasst **und dass** in dem Material mindestens eines Einzelringes (35a-35c) Verbundelemente bzw. Verschleißeinsätze angeordnet sind.

18. Seilrollen-Einlagering (100i, 100m) nach dem Oberbegriff des Anspruchs 1, **dadurch gekennzeichnet, dass** der Ringkorpus (1m) mindestens zwei radiale Einzelringe (24a-24e) unterschiedlicher Härte umfasst **und dass** der Außendurchmesser (D₁₁) mindestens eines inneren radialen Einzelringes (24b, 24d) mit dem Innendurchmesser (D₁₁) eines ihn umgebenden, äußeren radialen Einzelringes (24a, 24c) identisch ist **und dass** in dem Außendurchmesser (AD₉, AD₁₂) des äußeren radialen Einzelringes (24a, 24c) eine Laufrille (4i, 4l) angeordnet ist.

19. Seilrollen-Einlagering nach den vorhergehenden Ansprüchen 17 und 18, **dadurch gekennzeichnet, dass** der Ringkorpus mindestens drei axiale Einzelringe und mindestens zwei radiale Einzelringe umfasst.

## Claims

1. Pulley insert ring (100, 100a-100m) for insertion in a pulley of a ropeway installation with a rope (200, 200a-200f) with at least one braid (7, 7a-7e) from a braided outer material (7, 7a-7e), whereby the pulley insert ring (100, 100a-100m) has a ring body (1, 1a-1m) with an outer diameter (AD, AD₁-AD₁₂) and a centrically in the ring body (1, 1a-1m) arranged insertion with an inner diameter (ID, ID₁-ID₁₁) and whereby the ring body (1, 1a-1m) forms a shell surface (2, 2a-2f), at which between the marginal shoulders (3a-3r) a groove (4, 4a-4l) is arranged for the acceptance and the guidance of the rope (200, 200a-200f), **characterized in that** the pulley insert ring (100, 100a-100m) comprises a composite material with a first component in the form of an elastic carrier material (1, 1a-1m), with a shore hardness A + D in a range of 20 to 110, which is preferably approximately 65, and at least one second component in the form of composite elements (5, 5a-5v) with one contact surface each (6, 6a-6v) to the rope (200, 200a-200f) and whereby the composite elements (5, 5a, 5v) consist of a solid, inelastic material, with a Mohs hardness in a range of 2.5 to 10, which is preferably approximately 8, and with a liability coefficient of friction (µ₁, µ₂) to the braid's outer material (7, 7a-7e) in a range of 0.02 to 0.6, which is preferably approximately 0.2.

2. Pulley insert ring (100a, 100c, 100k) according to claim 1, **characterized in that** the groove (4a, 4c, 4j) is V-shaped in cross-section and has two edges (9a-9f).

3. Pulley insert ring (100, 100a-100m) according to one of the preceding claims, **characterized in that** the contact surfaces (6, 6a-6v) of the composite elements (5, 5a-5v) flush with or are deeper than the surface of the groove (4, 4a-4l).

4. Pulley insert ring (100, 100a-100m) according to one of the preceding claims, **characterized in that** the ratio between the sum of the contact surfaces (6, 6a-6v) to the surface of the carrier material (1, 1a-1m) in the groove (4, 4a-4l) is in a range from 10:90 % to 100:0 % and is preferably approximately 50:50 %.

5. Pulley insert ring (100b-100h) according to one of the preceding claims, **characterized in that** the composite elements (5b-5r) in the groove (4b-4h) are arranged at least in one row (R, R₁-R₇).

6. Pulley insert ring (100, 100a-100m) according to one of the preceding claims, **characterized in that** the composite elements (5, 5a-5v) are made of ceramic.

7. Pulley insert ring (100e) according to one of the preceding claims, **characterized in that** a periodicity (P_{VE}) of the composite elements (5h) is synchronized by means of an interspace (12) and a gap (11) to each other with a periodicity (P_{SS}) of a cable twist (SS) of the rope (200e).

8. Pulley insert ring (100g) according to one of the preceding claims, **characterized in that** the composite elements (5q) are formed web-shaped and form the groove (4g) by means of the contact surface (6q).

9. Pulley insert ring (100h) according to one of the preceding claims, **characterized in that** the composite elements (5r) are connected by means of an annular inner surface (22) to a segment wreath (23).

10. Pulley insert ring (100, 100a-100m) according to one of the preceding claims, **characterized in that** the composite elements (5, 5a-5v) are arranged in a form-fitting manner in a borehole or recess (10, 10a-10i) or in a sleeve (14, 14a).

11. Pulley insert ring (100j) according to one of the preceding claims, **characterized in that** the composite elements (5t) are arranged in a recess (10i) that there is a cavity (25) formed between a base or a support surface (20b) of the composite element (5t) and the carrier material (1j).

12. Pulley insert ring (100g, 100h, 100j) according to one of the preceding claims, **characterized in that** the ring body (1g, 1h, 1j) comprises two ring body halves (19a-19f), which hold the composite elements (5q, 5r, 5t).

13. Pulley insert ring (100i, 100l, 100m) according to one of the preceding claims, **characterized in that** the ring body (1i, 1l, 1m) comprises at least two axial individual rings (35a-35c) or/and at least two radial individual rings (24a-24e) of different hardness.

14. Method for producing a pulley insert ring (100k) according to one of the preceding claims 1-13, **characterized in that** the following method steps will be carried out:
a) - Preparing a casting mould or vulcanization mould (29) by inserting a mounting punch (30a, 30b) in a mounting hole (31a, 31b) of composite elements (5u, 5v);
b) - Inserting and positioning of the mounting punches (30a, 30b) together with the composite elements (5u, 5v) in a respective positioning borehole (32a, 32b) of the casting or vulcanization mould (29);
c) - Securing the mounting punches (30a, 30b) in the positioning borehole (32a, 32b) by means of a fuse (33a, 33b);
d) - Casting and vulcanizing a pulley insert ring blank or a ring body (1k);
e) - Removing the casting or the vulcanization mould (29);
f) - Breaking the mounting punches (30a, 30b) on one respective predetermined breaking point (34a, 34b).

15. Pulley with a pulley insert ring (100, 100a-100m) according to one of the preceding claims 1-13.

16. Ropeway installation with at least one pulley according to claim 15.

17. Pulley insert ring (1001) according to the preamble of the claim 1, **characterized in that** the ring body (1i, 1l, 1m) comprises at least three axial individual rings (35a-35c) of different hardness **and that** composite elements or wearing parts are arranged in the material of at least one individual ring (35a-35c).

18. Pulley insert ring (100i, 100m) according to the preamble of the claim 1, **characterized in that** the ring body (1m) comprises at least two radial individual rings (24a-24e) of different hardness **and that** the outer diameter (D₁₁) of at least one inner radial individual ring (24b, 24d) is identical with the inner diameter (D₁₁) of a surrounding outer radial individual ring (24a, 24c) **and that** a groove (4i, 4l) is arranged in the outer diameter (AD₉, AD₁₂) of the outer individual ring (24a, 24c).

19. Pulley insert ring according to the preceding claims 17 and 18, **characterized in that** the ring body comprises at least three axial individual rings and at least two radial individual rings.

## Revendications

1. Bague intégrée de poulie à câble (100, 100a-100m) pour l'insertion dans une poulie à câble d'une installation de téléphérique avec un câble (200, 200a-200f) avec au moins un toron (7, 7a-7e) en un matériau extérieur toronné (7, 7a-7e), la bague intégrée de poulie à câble (100, 100a-100m) comprenant un corps de la bague (1, 1a-1m) ayant un diamètre extérieur (AD, AD₁-AD₁₂) et un réceptacle disposé au centre dans le corps de la bague (1, 1a-1m) avec un diamètre intérieur (ID, ID₁-ID₁₁) et le corps de la bague (1, 1a-1m) formant une surface de couverture (2, 2a-2f) sur laquelle est disposée une cannelure (4, 4a-4l) pour recevoir et guider le câble (200, 200a-200f) entre des épaules de bord (3a-3r), **caractérisé en ce que** la bague intégrée de poulie à câble (100, 100a-100m) comprend un matériau composite, ayant un premier composant sous la forme d'un matériau support élastique (1, 1a-1m) avec une dureté Shore A + D dans une plage de 20 à 110, de préférence d'environ 65, et au moins un second composant sous la forme d'éléments composites (5, 5a-5v) ayant chacun une surface de contact (6, 6a-6v) au câble (200, 200a-200f) et dans lequel les éléments composites (5, 5a, 5v) sont constitués d'un matériau solide, inélastique, avec une dureté Mohs dans une plage de 2,5 à 10, qui est de préférence d'environ 8, et avec un coefficient de friction d'adhésion (µ₁, µ₂) au matériau extérieur toronné (7, 7a-7e) dans une plage de 0,02 à 0,6, qui est de préférence d'environ 0,2.

2. Bague intégrée de poulie à câble (100a, 100c, 100k) selon la revendication 1, **caractérisée en ce que** la cannelure (4a, 4c, 4j) a une section transversale en forme de V et forme deux flancs (9a-9f).

3. Bague intégrée de poulie à câble (100, 100a-100m) selon l'une des revendications précédentes, **caractérisée en ce que** les surfaces de contact (6, 6a-6v) des éléments composites (5, 5a-5v) sont au ras ou plus profondes que la surface de la cannelure (4, 4a-4l).

4. Bague intégrée de poulie à câble (100, 100a-100m) selon l'une des revendications précédentes, **caractérisée en ce que** le rapport entre la somme des surfaces de contact (6, 6a-6v) et la surface du matériau support (1, 1a-1m) dans la cannelure (4, 4a-4l) est compris entre 10:90 % et 100:0 % et est de préférence d'environ 50:50 %.

5. Bague intégrée de poulie à câble (100b-100h) selon l'une des revendications précédentes, **caractérisé en ce que** les éléments composites (5b-5r) sont disposés dans la cannelure (4b-4h) sur au moins une rangée (R, R₁-R₇).

6. Bague intégrée de poulie à câble (100, 100a-100m) selon l'une des revendications précédentes, **caractérisée en ce que** les éléments composites (5, 5a-5v) sont en céramique.

7. Bague intégrée de poulie à câble (100e) selon l'une des revendications précédentes, **caractérisée en ce qu'**une périodicité (P_{VE}) des éléments composites (5h), au moyen d'un espace (12) et d'une distance (11) entre eux, est synchronisée avec une périodicité (P_{SS}) d'un pas de câble (SS) du câble (200e).

8. Bague intégrée de poulie à câble (100g) selon l'une des revendications précédentes, **caractérisée en ce que** les éléments composites (5q) sont en forme de bande et forment la cannelure (4g) au moyen de la surface de contact (6q).

9. Bague intégrée de poulie à câble (100h) selon l'une des revendications précédentes, **caractérisée en ce que** les éléments composites (5r), au moyen d'une surface intérieure annulaire (22), sont reliés à une anneau segmenté (23).

10. Bague intégrée de poulie à câble (100, 100a-100m) selon l'une des revendications précédentes, **caractérisée en ce que** les éléments composites (5, 5a-5v) sont disposés à forme finale dans un alésage ou une exclusion (10, 10a-10i) ou dans une douille (14, 14a).

11. Bague intégrée de poulie à câble (100j) selon l'une des revendications précédentes, **caractérisée en ce que** les éléments composites (5t) sont disposés dans une exclusion (10i) de sorte qu'entre une base ou une surface de support (20b) de l'élément composite (5t) et le matériau support (1j) soit formée une cavité (25).

12. Bague intégrée de poulie à câble (100g, 100h, 100j) selon l'une des revendications précédentes, **caractérisée en ce que** le corps de la bague (1g, 1h, 1j) comprend deux moitiés de corps de la bague (19a-19f) qui contiennent les éléments composites (5q, 5r, 5t).

13. Bague intégrée de poulie à câble (100i, 100l, 100m) selon l'une des revendications précédentes, **caractérisée en ce que** le corps de la bague (1i, 1l, 1m) comprend au moins deux bagues axiales individuelles (35a-35c) et/ou au moins deux bagues radiales individuelles (24a-24e) de dureté différente.

14. Procédé de fabrication d'une bague intégrée de poulie à câble (100k) selon l'une des revendications 1-13 précédentes, **caractérisé en ce que** les étapes de procédé suivantes sont exécutées:
a) - préparation d'un moule de coulée ou de vulcanisation (29) par insertion de poinçons de fixation (30a, 30b) dans un trou de fixation (31a, 31b) d'éléments composites (5u, 5v);
b) - insertion et positionnement des poinçons de fixation (30a, 30b) avec les éléments composites (5u, 5v) dans un alésage de positionnement correspondant (32a, 32b) du moule de coulée ou de vulcanisation (29);
c) - fixation des poinçons de fixation (30a, 30b) dans l'alésage de positionnement (32a, 32b) au moyen d'un moyen de fixation (33a, 33b);
d) - coulée et vulcanisation d'une ébauche de bague intégrée de poulie à câble ou d'un corps de la bague (1k);
e) - enlèvement du moule de coulée ou de vulcanisation (29);
f) - rupture des poinçons de fixation (30a, 30b) à un point de rupture préétabli correspondant (34a, 34b).

15. Poulie à câble avec une bague intégrée de poulie à câble (100, 100a-100m) selon l'une des revendications précédentes 1-13.

16. Installation de téléphérique avec au moins une poulie à câble selon la revendication 15.

17. Bague intégrée de poulie à câble (100l) selon le préambule de la revendication 1, **caractérisée en ce que** le corps de la bague (1l) comprend au moins trois bagues axiales individuelles (35a-35c) de dureté différente et **en ce que** dans le matériau d'au moins une bague individuelle (35a-35c) sont disposés des éléments composites ou inserts d'usure.

18. Bague intégrée de poulie à câble (100i, 100m) selon le préambule de la revendication 1, **caractérisé en ce que** le corps de la bague (1m) comprend au moins deux bagues individuelles radiales (24a-24e) de dureté différente et **en ce que** le diamètre extérieur (D₁₁) d'au moins une bague individuelle radiale intérieure (24b, 24d) est identique au diamètre intérieur (D₁₁) d'une bague individuelle radiale extérieure (24a, 24c) environnante, et **en ce que** dans le diamètre extérieur (AD₉, AD₁₂) de la bague individuelle radiale extérieure (24a, 24c) est disposée une cannelure (4i, 4l).

19. Bague intégrée de poulie à câble selon les revendications 17 et 18 précédentes, **caractérisée en ce que** le corps de la bague comprend au moins trois bagues individuelles axiales et au moins deux bagues individuelles radiales.
